# EUROPÄISCHE PATENTSCHRIFT

(11) **EP 3 381 816 B1**
(45) Veröffentlichungstag und Bekanntmachung des Hinweises auf die Patenterteilung: **24.02.2021**
(21) Anmeldenummer: 17163427.2
(22) Anmeldetag: 28.03.2017
(51) Int. Cl.: B65B 9/13, B65B 53/02, B65B 59/00

(54) **VERFAHREN ZUR SCHAFFUNG ZUMINDEST EINES FREIRAUMS IN EINER AUS STRETCHFOLIE BESTEHENDEN UMMANTELUNG, WELCHE EINEN AUF EINER PALETTE ANGEORDNETEN GUTSTAPEL SICHERT, SOWIE FORMVORRICHTUNG ZUR DURCHFÜHRUNG DES VERFAHRENS**
METHOD FOR CREATING AT LEAST ONE CLEARANCE IN A SHEATH COMPOSED OF SHRINK FILM, SECURING A STACK OF ARTICLES ON A PALLET, AND MOULDING DEVICE FOR CARRYING OUT SAID METHOD
PROCÉDÉ DE CRÉATION D'AU MOINS UN ESPACE LIBRE DANS UNE ENVELOPPE COMPRENANT UNE FEUILLE ÉTIRABLE, QUI IMMOBILISE UNE PILE DE PRODUITS DISPOSÉS SUR UNE PALETTE ET DISPOSITIF DE FAÇONNAGE DESTINÉ À EXÉCUTER LE PROCÉDÉ

(43) Veröffentlichungstag der Anmeldung: 03.10.2018
(73) Patentinhaber: MSK - Verpackungs-Systeme GmbH, 47533 Kleve (DE)
(72) Erfinder:
(74) Vertreter: Dr. Stark & Partner Patentanwälte mbB

(56) Entgegenhaltungen:
- EP-A1- 0 601 222
- EP-A1- 0 697 337
- DE-A1- 4 404 599
- DE-U1- 9 001 052

## Beschreibung

Die Erfindung betrifft ein Verfahren zur Schaffung zumindest eines Freiraums in einer aus Stretchfolie bestehenden Ummantelung, welche einen auf einer Palette angeordneten Gutstapel sichert, wobei die Palette eine oberseitige Standfläche als Auflage für den Gutstapel sowie mehrere unterseitige und im Abstand zueinander unter Bildung von Fußfreiräumen angeordnete Standfüße aufweist, und wobei die Ummantelung zumindest teilweise die Unterseite der im Bereich der vier Außenkanten der Palette angeordneten Standfüße untergreift und wobei zumindest ein Freiraum in den zwischen zwei Standfüßen, die in einer Reihe mit zumindest zwei Standfüßen angeordnet sind, liegenden Ummantelungsbereich eingebracht wird.

Unter einer Stretchfolie wird im Folgenden eine schlauchförmig ausgebildete Dehnfolie verstanden. Diese Stretchfolie kann beispielsweise von einem zusammengefalteten Seitenfaltenschlauch abgelängt worden sein. Die Stretchfolie wird dann in Umfangsrichtung gesehen beispielsweise durch eine Raffeinrichtung gestretcht, so dass der Umfang vergrößert wird und anschließend, beispielsweise mit einer Überzieheinrichtung, über einen auf einer Palette angeordneten Gutstapel durch eine vertikale Bewegung üblicherweise von oben nach unten übergezogen. Dabei wird die Stretchfolie von der Überzieheinrichtung abgezogen und legt sich wegen ihrer Rückstellkräfte eng an der Außenseite des Gutstapels und der Palette an. Die Stretchfolie wird teilweise auch als Banderole bezeichnet.

Bei einer Euro-Palette sind insgesamt drei Reihen von je drei klotzartig ausgebildeten Standfüßen vorgesehen, wobei die drei Standfüße einer Reihe unterseitig durch ein Abstellbrett miteinander verbunden sind. Bei einer solchen Ausgestaltung untergreift die Ummantelung die Unterseite der beiden äußersten Abstellbretter. Die Standfläche besteht üblicherweise aus fünf Oberbrettern. Zwischen den Standfüßen und der Standfläche können auch noch Querbretter angeordnet sein.

Beim Stretchverfahren handelt es sich um ein Verfahren zur Ladungssicherung eines auf einer Palette angeordneten Gutstapels. Die Stretchfolie wird zum Überziehen zunächst gestretcht und dann im gestretchten Zustand von oben über den auf der Palette angeordneten Gutstapel gezogen. Hierdurch wird der Gutstapel an den vier Seiten und - sofern es sich um eine Stretchhaube handelt - auch an der Oberseite umhüllt. In Verbindung mit einem Bodenblatt ist auch ein allseitiger Schutz des Gutstapels möglich.

Aus der EP 0 697 337 A1 ist ein Verfahren und eine Vorrichtung für die äußere Verpackung einer palettierten Ladung durch Wärmeschrumpfen bekannt.

Für einen Transport mit Flurförderfahrzeugen, wie z. B. einem Gabelstapler, müssen zum Aufnehmen der Palette im unteren Bereich Freiräume eingebracht werden. Diese werden üblicherweise durch Einstechen der Gabelspitzen in die Ummantelung erzielt. Als Nachteil erweist sich, dass die Fußfreiräume nicht vollständig frei von der Ummantelung sind. Daher wird die Palette häufig nicht von automatisierten Hochregallagern angenommen, da die obligatorische Anlagenfähigkeitsprüfung der Fußfreiräume zwischen den Standfüßen negativ ausfällt. Auch wurde versucht, im Bereich der Seite der Palette, in die die Gabelspitzen eines Gabelstaplers eingeführt werden sollen, die Stretchfolie vollständig im Bereich der Palette zu entfernen. Damit sind zwar die Fußfreiräume vollständig frei, jedoch führt dies zu einer starken Beeinträchtigung der Ladungsstabilität.

Aufgabe der Erfindung ist es, die vorgenannten Nachteile zu vermeiden und ein Verfahren anzugeben, mit dem ein Fußfreiraum oder Fußfreiräume zwischen den Standfüßen einer Palette vollständig frei von der Ummantelung gemacht werden können, ohne dass hierdurch die Ladungsstabilität und die Schutzwirkung der Ummantelung gemindert wird.

Diese Aufgabe wird durch das Verfahren nach Anspruch 1 gelöst. Die Stretchfolie ist hinsichtlich ihrer Materialeigenschaften so ausgebildet, dass sie durch das Anwärmen erweicht und damit gezogen werden kann. Bei nachlassender Wärme kühlt die Stretchfolie wieder ab. Der Ummantelungsbereich wird nur auf der Seite des Gutstapels erwärmt und weggezogen, auf der ein Freiraum erzeugt werden soll. Durch das erfindungsgemäße Verfahren wird die Stretchfolie nicht beschädigt, d. h. beispielsweise eingerissen oder eingeschnitten. Hat sich der Ummantelungsbereich hinreichend abgekühlt, verbleibt dieser in dieser Position. Infolgedessen ist der betreffende Fußfreiraum vollständig frei von dem Ummantelungsbereich, da der Ummantelungsbereich um den betreffenden Fußfreiraum "herumgelegt" worden ist.

Mit dem erfindungsgemäßen Verfahren können insoweit die Fußfreiräume zuverlässig freigestellt werden. Das erfindungsgemäße Verfahren kann einfach in den bisherigen Stretchprozess integriert werden und erlaubt die Herstellung einer dauerhaften Ummantelung. Das Verfahren kann für alle Palettentypen und -lagen verwendet werden, wobei die Ladungsstabilität beliebig eingestellt werden kann.

Zu Beginn des Wegziehens des Ummantelungsbereichs von der Palette kann der Ummantelungsbereich lediglich nur vorgewärmt sein, so dass bei fortschreitendem Wegziehen eine weitere Wärmebeaufschlagung erfolgt. Unter einem Vorwärmen wird der Zustand des Ummantelungsbereiches verstanden, bei dem der Ummantelungsbereich zumindest verformbar ist, so dass der Ummantelungsbereich zur Erzielung des gewünschten Wegziehens und des Aufwärtsverlagerns um das hierfür erforderliche Maß dehnbar ist, ohne dass der Ummantelungsbereich beschädigt wird, d. h. einreißt.

Der erwärmte Ummantelungsbereich wird erst dann von der Palette weggezogen, wenn das Erwärmen des Ummantelungsbereiches vollständig abgeschlossen ist. In diesem Fall ist die sich durch das Erwärmen resultierende Konsistenz des Ummantelungsbereiches derart, dass der Ummantelungsbereich zum einen zur Erzielung des gewünschten Wegziehens und des Aufwärtsverlagerns um das hierfür erforderliche Maß dehnbar ist, ohne dass der Ummantelungsbereich beschädigt wird, d. h. einreißt. Zum anderen kann der in seiner nach oben verlagerten Position befindliche Ummantelungsbereich beim Abkühlen beispielsweise mit einem Standfuß, mit einer Standfläche der Palette oder mit einem seitlich an den Ummantelungsbereich anschließenden Teilbereich der Ummantelung verschweißen, so dass eine gute und dauerhafte Fixierung in seiner nach oben verlagerten Position erzielt wird. Dieses Verschweißen kann auch durch ein Andrücken des noch nicht vollständig abgekühlten Ummantelungsbereiches unterstützt werden.

Sofern der Ummantelungsbereich zwischen der Unterseite der Palette und dem Untergrund, beispielsweise dem Förderer, eingeklemmt ist, kann die Palette vor dem Erwärmen des Ummantelungsbereichs angehoben werden.

Die Aufwärtsverlagerung kann bis in den Bereich der Standfläche der Palette, vorzugsweise bis etwas unterhalb der Standfläche der Palette, erfolgen.

Beim nach oben Verlagern des Ummantelungsbereichs kann die Ummantelung um die jeweilige untere Innenkante der beiden Standfüße gezogen werden. Unter den Innenkanten werden die aufeinander zu weisenden Kanten der beiden Standfüße verstanden.

Die beiden Standfüße können direkt benachbart sein. Bei den beiden Standfüßen kann es sich alternativ auch um die äußersten Standfüße einer Reihe handeln. Sind in der Reihe drei Standfüße angeordnet, würde sich damit der nach oben verlagerte Ummantelungsbereich über den mittleren Standfuß erstrecken. Bei dieser Ausgestaltung ist nach Durchführen des Verfahrens der mittlere Standfuß sowohl im Bereich seiner Außenseite als auch im Bereich seiner Unterseite frei von dem Ummantelungsbereich. Weist die Palette beispielsweise fünf Standfüße in einer Reihe auf, so kann es sich bei den beiden Standfüßen auch um den zweiten und vierten Standfuß handeln.

Die Ummantelung kann an der Unterseite der beiden Standfüße vor und/oder nach dem Wegziehen des Ummantelungsbereichs von der Palette und/oder vor und/oder nach dem nach oben Verlagern des Ummantelungsbereichs fixiert werden.

Das Wegziehen und/oder das nach oben Verlagern des Ummantelungsbereichs von der Palette kann derart erfolgen, dass die Ummantelung noch an der Unterseite der beiden Standfüße fixiert bleibt.

Sofern die Stretchfolie als Schlauch ausgebildet ist, dessen beide Enden insoweit offen sind, ist die über den Gutstapel übergezogene Ummantelung im Bereich der Oberseite des Gutstapels nicht zu. Bei einer solchen Ausgestaltung wird die Stretchfolie so über den Gutstapel übergezogen, dass die Stretchfolie im übergezogenen Zustand gegenüber der Oberseite des Gutstapels mit einem umlaufenden Randbereich hervorsteht. Aufgrund der Rückstellkräfte legt sich jedoch der gegenüber der Oberkante des Gutstapels hervorstehende umlaufende Randbereich beim Überziehen sofort um und liegt auf der Oberseite des Gutstapels zur Erzielung einer guten Ladungssicherung an.

Als Ummantelung kann eine Stretchhaube oder eine Spannhaube verwendet werden. Im Gegensatz zu einer beidseitig offenen Ausgestaltung ist bei einer haubenförmigen Ausgestaltung der Stretchfolie der Gutstapel auch oberseitig völlig umschlossen.

Es bietet sich an, wenn zumindest ein Teilbereich der Ummantelung wenigstens in zumindest einem Bereich nahe einem Fußfreiraum oberhalb des Ummantelungsbereiches gegenüber der Palette von außen in horizontaler Richtung, vorzugsweise durch Andrücken, zumindest vorübergehend während des Wegziehens und/oder des nach oben Verlagerns des Ummantelungsbereichs fixiert wird. Auf diese Weise wird eine unerwünschte Halbmondbildung im Bereich der mittels des erfindungsgemäßen Verfahrens geformten Seite vermieden.

Dabei kann zumindest der nach oben verlagerte und im noch erwärmten Zustand befindliche Ummantelungsbereich vor dem Abkühlen wieder in Richtung der Palette verlagert werden. Auf diese Weise wird der Ummantelungsbereich wieder näher an die Palette verlagert und kann sich somit mit der um die beiden den (die) Freiraum (Freiräume) umfassenden Standfüße unterseitig gelegten Ummantelung verbinden, bevor der Ummantelungsbereich und die Ummantelung in Folge der Abkühlung aushärten. Diese Verlagerung in Richtung der Palette kann beispielsweise mittels einer geeigneten Einrichtung erfolgen, die hierzu aktiv in Richtung der Palette bewegt wird. Eine Verlagerung kann aber auch durch eine Rückstellung in Folge einer nachlassenden Zugkraft, die beispielsweise für das anfängliche Wegziehen des Ummantelungsbereichs im noch erwärmten Zustand von der Palette aufgebracht worden ist, erfolgen.

Ferner kann die Verlagerung wieder in Richtung der Palette zumindest des nach oben verlagerten und im noch erwärmten Zustand befindlichen Ummantelungsbereiches vor dem Abkühlen soweit in Richtung der Palette erfolgen, dass der aufgespannte Ummantelungsbereich und/oder die jeweils seitlich an den Ummantelungsbereich anschließenden Teilbereiche der Ummantelung rückseitig zumindest etwas gegen zumindest einen Standfuß und/oder die Standfläche der Palette gedrückt wird (werden). Wird bei einer solchen Verfahrweise der aufgespannte Ummantelungsbereich unmittelbar gegen die Palette gedrückt, verklebt der Ummantelungsbereich im Kontaktbereich mit der Palette nach dem Aushärten.

Durch die Verlagerung des aufgespannten Ummantelungsbereiches, wieder in Richtung der Palette, kann sich der seitlich an den Ummantelungsbereich anschließende Teilbereich der Ummantelung zu einer Art Falte umlegen, die sich zwischen dem aufgespannten Ummantelungsbereich und der Palette befindet und in Richtung des zu schaffenden Freiraumes weist. Die rückseitige Hälfte der Falte hat nach dem Andrücken einen direkten Kontakt zum Standfuß und/oder zur Standfläche der Palette, während die andere Faltenhälfte mit der rückseitigen Hälfte der Falte und mit dem in Richtung der Palette verlagerten aufgespannten Ummantelungsbereich in Kontakt ist.

Durch das Andrücken wird ein gutes Verkleben des Ummantelungsbereiches und/oder des seitlich an den Ummantelungsbereich anschließenden Teilbereichs der Ummantelung erzielt, so dass der nach oben verlagerte, nach Art eines Tors aufgespannte und ausgehärtete Ummantelungsbereich sicher und dauerhaft mit dem (den) Standfuß (Standfüßen) und/oder der Standfläche und/oder der seitlich an den Ummantelungsbereich anschließenden Teilbereich der Ummantelung fixiert ist. Durch das Andrücken wird insoweit eine zusätzliche Stabilisierung erzielt.

Es bietet sich an, wenn der erwärmte Ummantelungsbereich nach Abschluss der Verlagerung nach oben, vorzugsweise mittels eines Luftstroms, gekühlt wird. Zum Kühlen kann beispielsweise ein Gebläse, eine Düse oder Druckluft verwendet werden. Hierdurch wird die Verfestigung des um den Fußfreiraum bzw. um die Fußfreiräume "herumgelegten" Ummantelungsbereiches beschleunigt.

Die Erfindung betrifft auch eine Formvorrichtung zur Durchführung eines Verfahrens zur Schaffung zumindest eines Freiraums in einer aus Stretchfolie bestehenden Ummantelung, welche einen auf einer Palette angeordneten Gutstapel sichert, wobei die Palette eine oberseitige Standfläche als Auflage für den Gutstapel sowie mehrere unterseitige und im Abstand zueinander unter Bildung von Fußfreiräumen angeordnete Standfüße aufweist, und wobei die Ummantelung zumindest teilweise die Unterseite der im Bereich der vier Außenkanten der Palette angeordneten Standfüße untergreift und wobei zumindest ein Freiraum in den zwischen zwei Standfüßen, die in einer Reihe mit zumindest zwei Standfüßen angeordnet sind, liegenden Ummantelungsbereich eingebracht wird.

Unter einer Stretchfolie wird im Folgenden eine schlauchförmig ausgebildete Dehnfolie verstanden. Diese Stretchfolie kann beispielsweise von einem zusammengefalteten Seitenfaltenschlauch abgelängt worden sein. Die Stretchfolie wird dann in Umfangsrichtung gesehen beispielsweise durch eine Raffeinrichtung gestretcht, so dass der Umfang vergrößert wird und anschließend, beispielsweise mit einer Überzieheinrichtung, über einen auf einer Palette angeordneten Gutstapel durch eine vertikale Bewegung üblicherweise von oben nach unten übergezogen. Dabei wird die Stretchfolie von der Überzieheinrichtung abgezogen und legt sich wegen ihrer Rückstellkräfte eng an der Außenseite des Gutstapels und der Palette an. Die Stretchfolie wird teilweise auch als Banderole bezeichnet.

Bei einer Euro-Palette sind insgesamt drei Reihen von je drei klotzartig ausgebildeten Standfüßen vorgesehen, wobei die drei Standfüße einer Reihe unterseitig durch ein Abstellbrett miteinander verbunden sind. Bei einer solchen Ausgestaltung untergreift die Ummantelung die Unterseite der beiden äußersten Abstellbretter. Die Standfläche besteht üblicherweise aus fünf Oberbrettern. Zwischen den Standfüßen und der Standfläche können auch noch Querbretter angeordnet sein.

Beim Stretchverfahren handelt es sich um ein Verfahren zur Ladungssicherung eines auf einer Palette angeordneten Gutstapels. Die Stretchfolie wird zum Überziehen zunächst gestretcht und dann im gestretchten Zustand von oben über den auf der Palette angeordneten Gutstapel gezogen. Hierdurch wird der Gutstapel an den vier Seiten und - sofern es sich um eine Stretchhaube handelt - auch an der Oberseite umhüllt. In Verbindung mit einem Bodenblatt ist auch ein allseitiger Schutz des Gutstapels möglich.

Für einen Transport mit Flurförderfahrzeugen, wie z. B. einem Gabelstapler, müssen zum Aufnehmen der Palette im unteren Bereich Freiräume eingebracht werden. Diese werden üblicherweise durch Einstechen der Gabelspitzen in die Ummantelung erzielt. Als Nachteil erweist sich, dass die Fußfreiräume nicht vollständig frei von der Ummantelung sind. Daher wird die Palette häufig nicht von automatisierten Hochregallagern angenommen, da die obligatorische Anlagenfähigkeitsprüfung der Fußfreiräume zwischen den Standfüßen negativ ausfällt. Auch wurde versucht, im Bereich der Seite der Palette, in die die Gabelspitzen eines Gabelstaplers eingeführt werden sollen, die Stretchfolie vollständig im Bereich der Palette zu entfernen. Damit sind zwar die Fußfreiräume vollständig frei, jedoch führt dies zu einer starken Beeinträchtigung der Ladungsstabilität.

Aufgabe der Erfindung ist es, die vorgenannten Nachteile zu vermeiden und eine Vorrichtung anzugeben, die eine vollständige Befreiung eines Fußfreiraums oder von Fußfreiräumen zwischen den Standfüßen einer Palette von der Ummantelung ermöglicht, ohne dass hierdurch die Ladungsstabilität und die Schutzwirkung der Ummantelung gemindert wird.

Diese Aufgabe wird durch Anspruch 13 gelöst.

Mittels jeder Heizeinrichtung kann zunächst der betreffende Ummantelungsbereich erwärmt werden. Durch die Formvorrichtung wird der erwärmte Ummantelungsbereich dann zunächst von der Palette weg nach außen gezogen und anschließend durch eine vertikale Bewegung der Formfinger nach oben verlagert. Auf diese Weise wird der Ummantelungsbereich nach Art eines Tors aufgespannt. Diese Form behält der Ummantelungsbereich nach dem Abkühlen bei, so dass der entsprechende Fußfreiraum bzw. die entsprechenden Fußfreiräume dauerhaft frei zugänglich ist (sind). Beim nach oben Verlagern des Ummantelungsbereichs wird die Ummantelung vorzugsweise um die jeweilige untere Innenkante einer jeden der beiden Standfüße gezogen, so dass hierdurch in den beiden seitlich an den nach oben verlagerten Ummantelungsbereich angrenzenden Bereichen der Ummantelung die Stretchfolie bestehen bleibt und hierdurch eine Ladungssicherheit gegeben ist.

Bei den beiden Standfüßen kann es sich beispielsweise um direkt benachbarte Standfüße handeln, so dass dann ein Fußfreiraum frei zugänglich ist. Sofern es sich bei den beiden Standfüßen um die äußersten Standfüße einer Reihe handelt, sind zumindest zwei Fußfreiräume sowie die Stirnseite und die Unterseite des (der) dazwischen liegenden Standfußes (Standfüße) frei zugänglich. Die Ummantelung kann an der Unterseite der beiden Standfüße vor und/oder nach dem Wegziehen des Ummantelungsbereichs von der Palette und/oder vor und/oder nach dem nach oben Verlagern des Ummantelungsbereichs fixiert werden, oder alternativ kann das Wegziehen und/oder das nach oben Verlagern des Ummantelungsbereichs von der Palette derart erfolgen, dass die Ummantelung noch an der Unterseite der beiden Standfüße fixiert bleibt.

Bei der vertikalen Verlagerung kann es sich um eine ausschließlich vertikale Verlagerung handeln. Selbstverständlich kann der betreffende Formfinger bei der vertikalen Verlagerung auch noch gleichzeitig horizontal, wie beispielsweise bei einer Schwenkbewegung, verlagert werden.

Die erfindungsgemäße Formvorrichtung stellt eine Erweiterung des bekannten Stretchsystems für Vollpaletten um das automatisierte Freiformen eines Fußfreiraums bzw. von Fußfreiräumen einer Palette zur Sicherstellung der Anlagenfähigkeit für automatisierte Lagereinrichtungen, insbesondere Hochregallager, dar. Die Formvorrichtung kann auch in eine Stretchanlage integriert sein.

Durch die kompakte Bauweise kann die erfindungsgemäße Formvorrichtung einfach in einen bereits bestehenden Stretchprozess integriert oder eine bereits bestehende Stretchanlage um eine Formvorrichtung und eine Heizeinrichtung erweitert werden. Die erfindungsgemäße Formvorrichtung und Heizeinrichtung zeichnen sich durch eine hohe Variabilität aus. Sie sind für unterschiedliche Palettenformate, wie beispielsweise Europoolpalette, "Industriepalette" (EUR2) oder "Düsseldorferpalette" (EUR6), geeignet. Sofern die Formvorrichtung und die Heizeinrichtung in einen Stretchplatz integriert sind, befinden sie sich in den Ruhezeiten und während des Stretchprozesses bzw. Dehnprozesses vorzugsweise außerhalb der Verfahrwege der das Stretchen bzw. Dehnen und das Überziehen bewirkenden Komponenten.

Zumindest eine Heizeinrichtung kann wenigstens zwei in einem Winkel, vorzugsweise in einem rechten Winkel, zueinander ausgerichtete Heizflächen umfassen, wobei die eine Heizfläche die Ummantelung im Bereich der betreffenden Außenfläche der Palette und die andere Heizfläche die Ummantelung im an die Außenfläche angrenzenden Randbereich der Unterseite der Palette mit Wärme beaufschlagt.

Dabei kann zumindest eine Heizeinrichtung zwischen einer Heizposition und einer Parkposition, vorzugsweise durch Verschwenken, verlagerbar sein.

Dabei sind vorzugsweise zumindest zwei auf einander zuweisende Heizeinrichtungen vorgesehen, wobei der Abstand zwischen den beiden Heizeinrichtungen zumindest etwas größer ist als der Abstand zwischen den beiden gegenüberliegenden Außenflächen der Palette, in die jeweils zumindest ein Freiraum eingebracht werden soll. Die Heizeinrichtungen können getrennt oder synchron verlagerbar sein. Unter dem Abstand zwischen den beiden Heizeinrichtungen wird der Abstand zwischen den am nächsten beieinander liegenden Punkten beider Heizeinrichtungen verstanden.

Dabei kann der Abstand zwischen den Heizeinrichtungen veränderbar sein. Hierzu kann beispielsweise zumindest einer Heizeinrichtung ein pneumatischer oder ein elektrischer Antrieb zugeordnet sein. Damit können die Heizeinrichtungen an unterschiedliche Palettenformate angepasst werden.

Jede Heizeinrichtung kann an einem Haltearm angeordnet sein, und die Haltearme können über ein Verbindungselement miteinander verbunden sein. Die beiden Haltearme und das Verbindungselement bilden einen in etwa u-förmig ausgebildeten Rahmen. Sofern die Heizeinrichtungen verschwenkbar sind, bietet es sich an, wenn das Verbindungselement um seine Längsachse herum drehbar gelagert ist. Zum Verschwenken kann dem Verbindungselement ein Antrieb zugeordnet sein.

Dabei bietet es sich an, wenn zumindest ein Formfinger um eine parallel zum horizontalen Verfahrweg ausgerichtete Schwenkachse verschwenkbar gelagert ist, so dass dieser Formfinger zum Formen mittels eines Antriebs nach oben und nach außen verschwenkbar ist. Vorzugsweise weist die Formvorrichtung zwei, um jeweils eine parallel zum horizontalen Verfahrweg ausgerichtete Schwenkachse schwenkbar gelagerte Formfinger auf. In ihrer Ruheposition weisen die Formfinger aufeinander zu und werden zum Formen voneinander weg nach außen verschwenkt. Damit wird der Ummantelungsbereich nach oben verlagert und auf diese Weise nach Art eines Tors aufgespannt, während sich die Ummantelung in den beiden seitlich an den Ummantelungsbereich angrenzenden Bereich noch in ihrer ursprünglichen Position befindet und damit die Unterseite der Palette noch umgreift. Damit ist (sind) der entsprechende Fußfreiraum bzw. die entsprechenden Fußfreiräume frei zugänglich. Zumindest ein um eine parallel zum horizontalen Verfahrweg ausgerichtete Schwenkachse verschwenkbar gelagerter Formfinger ist in Bezug auf die Palette vorzugsweise so ausgerichtet, dass der Formfinger sich beim Verschwenken in einem Abstand zur Außenseite der Palette befindet und damit nicht in Kontakt mit der Palette kommen kann.

Zusätzlich kann die Formvorrichtung zumindest zwei Formfinger aufweisen, die zum Wegziehen des Ummantelungsbereichs von der Palette weg in horizontaler Richtung verlagerbar sind. Bei einer solchen Ausgestaltung dienen diese Formfinger nur dem Wegziehen des Ummantelungsbereichs, während die um jeweils eine parallel zum horizontalen Verfahrweg ausgerichtete Schwenkachse verschwenkbar gelagerten Formfinger die nach-oben-Verlagerung des Ummantelungsbereichs bewirken.

Mindestens ein verschwenkbar gelagerter Formfinger kann gegenüber dem (den) nur in horizontaler Richtung verlagerbaren Formfinger(n), die diesem verschwenkbar gelagerter Formfinger zugeordnet ist (sind), so ausgebildet und/oder angeordnet sein, dass dieser verschwenkbar gelagerte Formfinger beim Wegziehen nicht mit dem Ummantelungsbereich in Kontakt ist. Auf diese Weise kann der herausgezogene Ummantelungsbereich sicher von den verschwenkbar gelagerten Formfingern übernommen werden.

Dabei kann die Formvorrichtung für eine horizontale Verlagerung eine Führung und einen Antrieb aufweisen, und/oder die Formvorrichtung kann für eine vertikale Verlagerung eine Vertikalführung und einen Antrieb aufweisen.

Zum Ergreifen des Ummantelungsbereichs kann das Ende zumindest eines Formfingers als Lasche und/oder als Haken ausgebildet sein. Bei dem Haken kann es sich beispielsweise um eine endseitige an dem betreffenden Formfinger vorgesehene Abwinklung handeln, die von unten in die Ummantelung hineinragt. Durch die Laschen oder Haken kann der Ummantelungsbereich nach außen von der Palette weggezogen werden. Die der Palette zugewandte Seite oder Fläche einer Lasche oder eines Hakens kann auch als Andrückfläche verwendet werden. Wird im später aufgespannten Zustand die Formvorrichtung wieder horizontal in Richtung der orthogonal zur Förderrichtung der Palette ausgerichteten Seite der Palette verlagert, drücken die Formfinger mit ihrer der Palette zugewandten Fläche die noch nicht erkaltete doppellagige Ummantelung gegen die Standfläche bzw. die Außenseite des Standfußes der Palette. Hierdurch wird der aufgespannte Ummantelungsbereich und die angrenzende Ummantelung wieder näher an die Palette verlagert und verbinden sich beim Erkalten mit der um den Standfuß gelegten Ummantelung, bevor sie aushärtet, so dass hierdurch eine zusätzliche Stabilisierung durch den verbundenen Ummantelungsbereich mit der angrenzenden Ummantelung und/oder der Palette erreicht wird.

Bei zumindest einem Formfinger kann zumindest ein, vorzugsweise jeder, mit der Ummantelung und/oder mit dem Ummantelungsbereich in Kontakt kommende Bereich mit einem Antihaftmaterial und/oder hitzebeständigen Material beschichtet und/oder bestückt sein. Bei Verwendung eines Antihaftmaterials wird die Reibung zwischen dem Formfinger und der Ummantelung reduziert, so dass die Ummantelung nicht beschädigt wird. Durch die Verwendung eines Antihaftmaterials wird auch ein Verkleben der warmen Ummantelung mit den Oberflächen der Formfinger vermieden. So wird durch Antihaftmaterialien die Oberflächenenergie am Formfinger im Verhältnis zur warmen Ummantelung minimiert, so dass eine Oberflächenbenetzung und eine adhäsive Bindung vermieden werden. Da sich die Formvorrichtung in ihrer Ruheposition außerhalb des Hitzebereichs befindet, wird ein Erwärmen der Formvorrichtung, insbesondere der Formfinger, so weit wie möglich reduziert, so dass hierdurch ebenfalls die Oberflächenenergie und die Adhäsionsneigung gering gehalten werden. Die Verwendung eines hitzebeständigen Materials bietet sich an, da die Ummantelung bei Durchführung des Verfahrens sich noch im erwärmten Zustand befindet.

Die mit einer Seite einer Palette zusammenwirkende Formvorrichtung kann aus zwei Hälften bestehen, wobei jede Hälfte zumindest jeweils einen verschwenkbaren Formfinger und gegebenenfalls auch zumindest einen Formfinger aufweist und vorzugsweise jede Hälfte spiegelbildlich aufgebaut ist und wobei vorzugsweise beide Hälften synchron verlagerbar sind. Eine solche Ausgestaltung bietet sich beispielsweise bei einer Palette mit drei Reihen an Standfüßen an, wobei in einem solchen Fall der Förderer, bei dem es sich beispielsweise auch um einen Überziehplatzförderer handeln kann, üblicherweise auch drei, an die Reihen der Standfüße der Palette angepasste Verfahrspuren aufweist. Ein Überziehplatzförderer befindet sich üblicherweise in einer Stretchanlage. In einer Stretchanlage können schlauchförmige Stretchfolien oder auch Stretchfolienhauben übergezogen werden. Bei einer Verfahrspur kann es sich beispielsweise um eine Kettenspur, eine Riemenspur oder dergleichen handeln. Die eine Hälfte der Formvorrichtung schafft dabei einen Freiraum in dem linken Fußfreiraum und die andere Hälfte der Formvorrichtung einen Freiraum in dem rechten Fußfreiraum. Damit wird der Ummantelungsbereich um die beiden Fußfreiräume "herumgelegt" und verfestigt sich beim Abkühlen in der gespannten Position. Infolgedessen ist die Palette sowohl im Bereich der beiden Fußfreiräume als auch stirnseitig im Bereich der mittleren Reihe der Standfüße frei.

Zumindest einem Formfinger kann ein den Schwenkweg dieses Formfingers begrenzender Anschlag zugordnet sein, der sich parallel zum horizontalen Verfahrweg in entgegengesetzt weisender Richtung über den (die) diesem Formfinger zugeordneten Formfinger vorstehend erstreckt. Während der Schwenkbewegung ragt der Anschlag damit in die Kontur der Palette, d. h. in den Fußfreiraum, hinein. Kommt der Anschlag beim Verschwenken des Formfingers in Kontakt, beispielsweise mit dem Standfuß des Fußfreiraumes, wird die Schwenkbewegung gestoppt.

Zur Anpassung der Ausrichtung der Formvorrichtung gegenüber der Palette kann ein, vorzugsweise als vertikal ausgerichteter Zapfen ausgebildetes, Winkelausgleichelement vorgesehen sein. Damit ist die Formvorrichtung auch in Bezug auf eine nicht optimal angeordnete Palette ausrichtbar.

Zur Fixierung der Ummantelung beim Wegziehen und/oder beim nach oben Verlagern des Ummantelungsbereichs gegenüber der Palette, vorzugsweise im Bereich der zu formenden Seite der Ummantelung, kann ein in Richtung der Palette verlagerbares Fixierelement vorgesehen sein.

Im Folgenden werden in den Zeichnungen dargestellte Ausführungsbeispiele der Erfindung erläutert. Es zeigen:
- Fig. 1: eine schräge Draufsicht auf einen Förderer mit insgesamt zwei erfindungsgemäßen Formvorrichtungen, zwei Heizeinrichtungen sowie mit einer innerhalb der Kontur des Förderers befindlichen Palettenhubeinrichtung und einer auf dem Förderer befindlichen Palette,
- Fig. 2: den Gegenstand nach Fig. 1 ohne Palette,
- Fig. 3: den Gegenstand nach Fig. 1 ohne Förderer und ohne Palette, wobei die beiden Heizeinrichtungen hochgeschwenkt sind,
- Fig. 4: den Gegenstand nach Fig. 3 mit herunter geschwenkten Heizeinrichtungen,
- Fig. 5: den Gegenstand nach Fig. 4, wobei der Abstand zwischen den Heizeinrichtungen reduziert ist,
- Fig. 6: eine Formvorrichtung im eingeklappten und nicht angehobenen Zustand (Ruheposition),
- Fig. 7: die Formvorrichtung nach Fig. 6 im ausgeklappten und angehobenen Zustand,
- Fig. 8: die Formvorrichtung in der Ruheposition,
- Fig. 9: die Heranfahrbewegung der Formvorrichtung an die Palette,
- Fig. 10: die Wegziehbewegung der Formvorrichtung,
- Fig. 11: das Formen des Ummantelungsbereichs,
- Fig. 12: den Andrückvorgang und
- Fig. 13: die Ummantelung im geformten Zustand.

In allen Figuren werden für gleiche bzw. gleichartige Bauteile übereinstimmende Bezugszeichen verwendet.

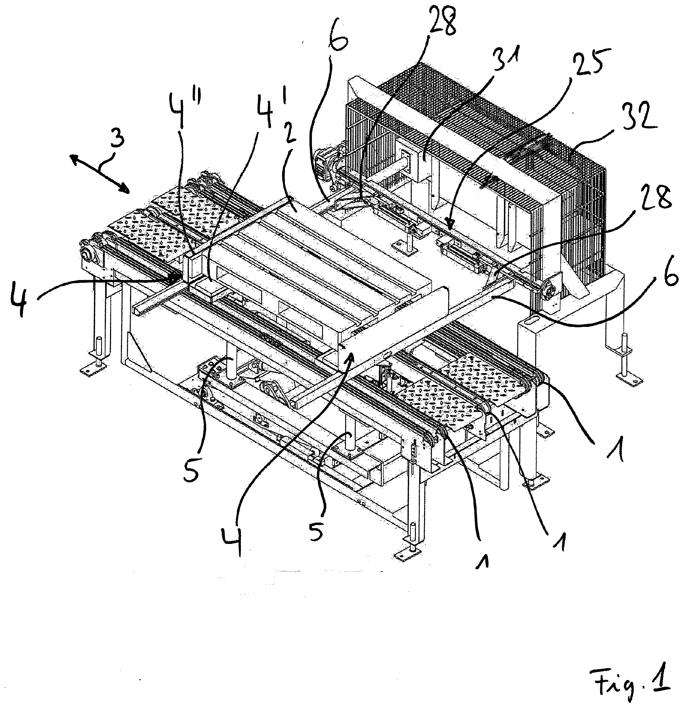

Fig. 1 zeigt einen Förderer, der in dem dargestellten Ausführungsbeispiel als Kettenförderer ausgebildet ist. Der Kettenförderer umfasst in dem dargestellten Ausführungsbeispiel fünf Kettenspuren 1. Die erste und die zweite Kettenspur 1 bzw. die vierte und die fünfte Kettenspur 1 sind jeweils in einem geringen Abstand dicht zueinander angeordnet. Der Abstand benachbarter Kettenspuren 1 ist an die Formate der zu fördernden Palette 2 angepasst. Mittels des Kettenförderers kann eine darauf abgestellte Palette 2, auf der oberseitig ein in Fig. 1 nicht dargestellter Gutstapel angeordnet ist, in Förderrichtung (Pfeile 3) bewegt werden. Üblicherweise sind die beiden Längskanten der Palette 2 parallel zur Förderrichtung 3 ausgerichtet, während die beiden kurzen Stirnkanten der Palette 2 orthogonal zur Förderrichtung 3 ausgerichtet sind.

Ferner ist eine Palettenhubeinrichtung vorgesehen, die innerhalb der Kontur des Förderers angeordnet ist. Die Palettenhubeinrichtung weist insgesamt vier Hubstempel 5 auf. Wie beispielsweise Fig. 1 zu entnehmen ist, sind zwei Hubstempel 5 zwischen der zweiten Kettenspur 1 von links gesehen und der mittleren Kettenspur 1 und zwei Hubstempel 5 zwischen der mittleren Kettenspur 1 und der zweiten Kettenspur 1 von rechts gesehen angeordnet. Die Hubstempel 5 sind vertikal verlagerbar, so dass eine auf den Kettenspuren 1 stehende Palette 2 angehoben und damit freigestellt werden kann.

Die beiden Enden des Förderers sind über geeignete Anschlussstellen mit der weiteren Fördertechnik oder mit anderen Anlagenbestandteilen, wie z. B. einem vorgelagerten Stretchplatz, verbunden. In dem Stretchplatz wird eine aus Stretchfolie bestehende Ummantelung 17 übergezogen. Eine übliche Palette 2, so wie sie beispielsweise in den Fig. 1, 8 und 12 dargestellt ist, weist drei Reihen bestehend aus je drei klotzartig ausgebildeten Standfüßen 19, 20, 21 auf, wobei die drei Standfüße 19 bzw. 20 bzw. 21 in einer Reihe unterseitig durch ein Abstellbrett 22 miteinander verbunden sind. Die Ummantelung 17 ist derart durch Stretchen übergezogen, dass die Ummantelung 17 insoweit die Unterseite der beiden äußersten Abstellbretter 22 (Standfüße 19 bzw. 21) sowie die beiden äußeren Enden des die Standfüße 20 verbindenden Abstellbrettes 22 umgreift.

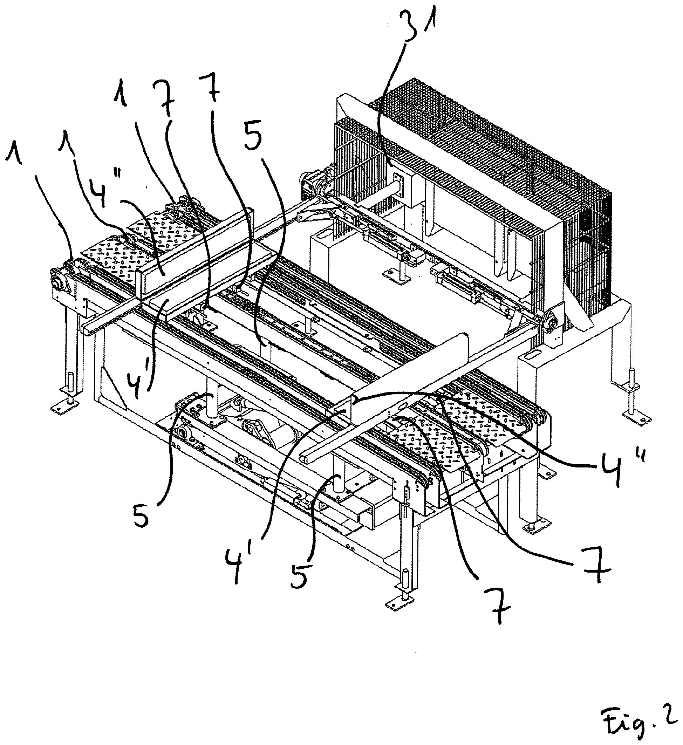

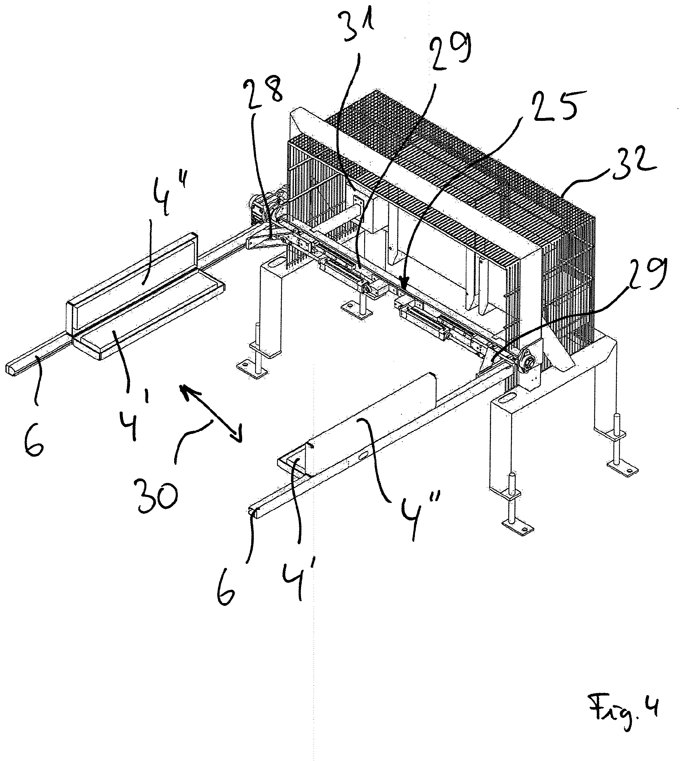

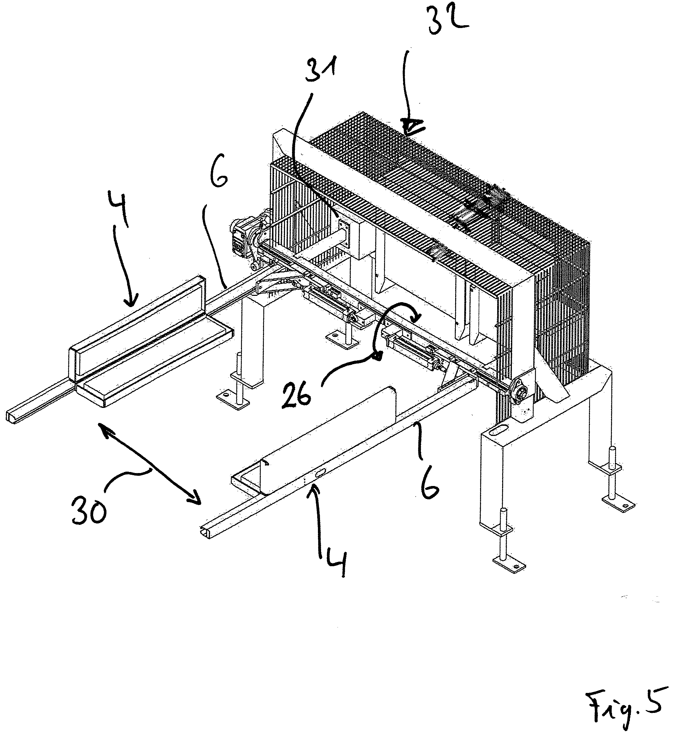

Wie in den Fig. 1 bis 5 dargestellt, sind zwei beispielsweise elektrisch betriebene Heizeinrichtungen 4 vorgesehen. Die Heizeinrichtungen 4 sind aufeinander zuweisend ausgerichtet. Die eine Heizeinrichtung 4 wirkt - wie in Fig. 1 dargestellt - auf die eine orthogonal zur Förderrichtung 3 ausgerichtete Seite der Palette 2 und die zweite Heizeinrichtung 4 auf die gegenüberliegende andere orthogonal zur Förderrichtung 3 ausgerichtete Seite der Palette 2.

Jede Heizeinrichtung 4 besteht in dem dargestellten Ausführungsbeispiel aus zwei in einem rechten Winkel zueinander ausgerichteten Heizflächen 4', 4". Die Heizfläche 4" ist vertikal ausgerichtet und erwärmt die Ummantelung 17 im Bereich der betreffenden Außenfläche der Palette 2. Die andere Heizfläche 4' ist horizontal ausgerichtet und erwärmt die Ummantelung 17 im an die Außenfläche angrenzenden Randbereich der Unterseite der Palette 2.

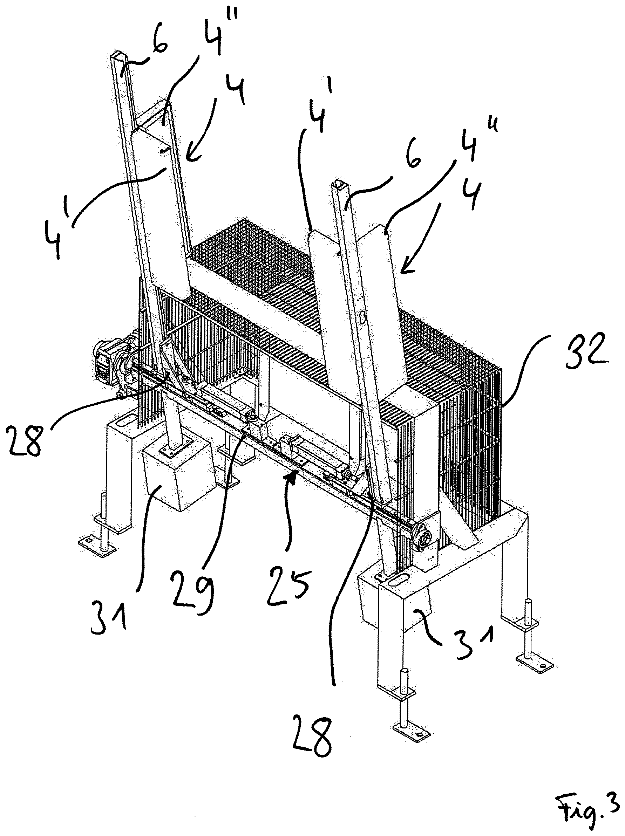

Beide Heizeinrichtungen 4 sind zwischen einer Heizposition, so wie sie beispielsweise in Fig. 1 dargestellt ist und einer Parkposition, so wie sie beispielsweise in Fig. 3 dargestellt ist, durch Verschwenken verlagerbar. Hierzu ist jede Heizeinrichtung 4 an einem Haltearm 6 angeordnet. Die Haltearme 6 sind über ein Verbindungselement 25 miteinander verbunden. Die beiden Haltearme 6 und das Verbindungselement 25 bilden einen in etwa u-förmig ausgebildeten Rahmen.

Wie den Fig. 1 bis 5 zu entnehmen ist, ist das Verbindungselement 25 um seine Längsachse herum drehbar gelagert (Pfeil 26). Damit können die Heizeinrichtungen 4 beispielsweise beim Herantransport eines Gutstapels in ihre Parkposition hochgeschwenkt werden. Befindet sich der Gutstapel zwischen den Heizeinrichtungen 4, können diese in ihre Heizposition, so wie sie beispielsweise in Fig. 1 dargestellt ist, heruntergeschwenkt werden.

Beim Herunterschwenken ist der Abstand zwischen den beiden Heizeinrichtungen 4 zumindest etwas größer als der Abstand zwischen den beiden gegenüberliegenden Außenflächen der Palette 2, in die jeweils zumindest ein Freiraum eingebracht werden soll. Unter dem Abstand zwischen den beiden Heizeinrichtungen 4 wird der Abstand zwischen den am nächsten beieinander liegenden Punkten beider Heizeinrichtungen 4 verstanden.

Der Abstand zwischen den Heizeinrichtungen 4 kann bei dem dargestellten Ausführungsbeispiel verändert werden. Hierfür weist jeder Haltearm 6 im Bereich seines dem Verbindungselement 25 zugewandten Endes einen Schlitten 28 auf, der in einer Führung 29, die dem Verbindungselement 25 zugeordnet ist, verfahrbar ist. Jedem Haltearm 6 kann ein eigener Antrieb oder beiden Haltearmen 6 ein gemeinsamer Antrieb zugeordnet sein. Auf diese Weise sind die Haltearme 6 und damit auch die Heizeinrichtungen 4 in Richtung des Pfeils 30 verlagerbar. Damit kann jede Heizeinrichtung 4 mit ihrer horizontal ausgerichteten Heizfläche 4' unter die Palette 2, d. h. in die in Fig. 1 dargestellte Position, gefahren werden.

Zur Erleichterung der Schwenkbewegung in Richtung des Pfeils 26 weist jeder Haltearm 6 an seinem der Heizeinrichtung 4 gegenüberliegenden Ende ein Gegengewicht 31 auf. Für die Schwenkbewegung in Richtung des Pfeils 26 ist ein nicht näher dargestellter Antrieb vorgesehen. Der Antrieb ist über einen nicht dargestellten Übertragungsmechanismus mit dem Verbindungselement 25 verbunden. Der Bereich der Gegengewichte 31 ist durch ein Schutzgitter 32 geschützt.

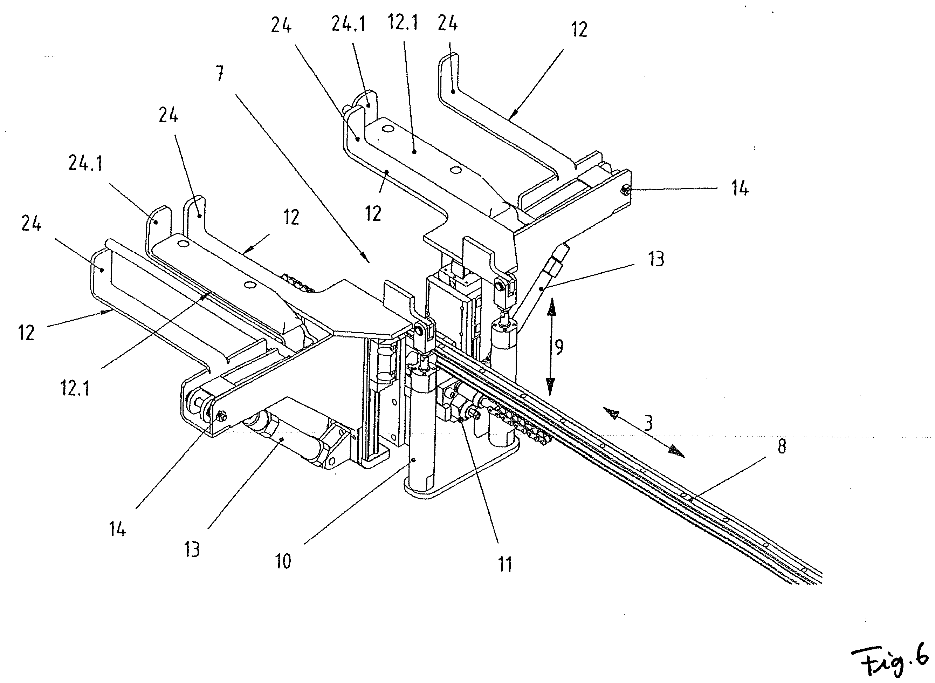

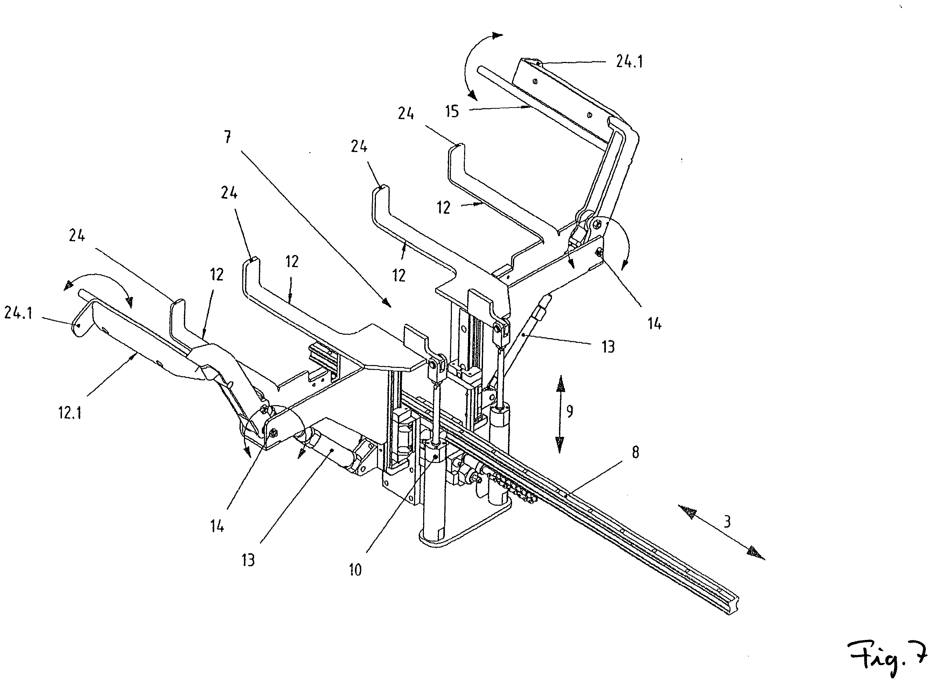

Ferner sind insgesamt zwei Formvorrichtungen 7 vorgesehen. Wie insbesondere den Fig. 6 und 7 zu entnehmen ist, ist jeder orthogonal zur Förderrichtung 3 ausgerichteten Seite der Palette 2 eine Formvorrichtung 7 zugeordnet. Damit wirkt die eine Formvorrichtung 7 auf die eine orthogonal zur Förderrichtung 3 ausgerichtete Seite der Palette 2 und die andere Formvorrichtung 7 auf die gegenüberliegende andere orthogonal zur Förderrichtung 3 ausgerichtete Seite der Palette 2. Jede Formvorrichtung 7 besteht aus zwei Hälften, wobei die eine Hälfte im Bereich zwischen der einen äußeren Kettenspur 1 und der mittleren Kettenspur 1 angeordnet ist und die andere Hälfte im Bereich zwischen der mittleren Kettenspur 1 und der anderen äußeren Kettenspur 1 angeordnet ist. Die beiden Hälften der auf eine Seite einer Palette 2 wirkenden Formvorrichtung 7 sind spiegelbildlich zueinander aufgebaut.

Die Fig. 6 und 7 zeigen im Detail eine Formvorrichtung 7. Jede Formvorrichtung 7 weist eine Führung 8 und einen nicht dargestellten Antrieb auf. Auf diese Weise kann jede Formvorrichtung 7 in Förderrichtung 3 gesehen von beiden Seiten an die Palette 2 heran und wieder weg verlagert werden. Die Führung 8 ist parallel und unterhalb der mittleren Kettenspur 1 angeordnet. In dem dargestellten Ausführungsbeispiel ist die Führung 8 als Kugelschienenführung ausgebildet. Es sind aber auch andere Ausgestaltungen möglich. Es ist auch denkbar, dass jeder der beiden Formvorrichtungen 7 eine eigene Führung 8 zugeordnet ist. Dann kann die mit der einen orthogonal zur Förderrichtung 3 ausgerichteten Seite der Palette 2 zusammenwirkende Formvorrichtung 7 getrennt von der mit der anderen orthogonal zur Förderrichtung 3 ausgerichteten Seite der Palette 2 zusammenwirkende Formvorrichtung 7 verlagert werden. Zum vertikalen Anheben (Pfeil 9) für den Formvorgang und zum späteren Absenken nach dem Formvorgang ist eine Vertikalführung mit einem Antrieb vorgesehen, der in dem dargestellten Ausführungsbeispiel einen Zylinder 10 umfasst. Mittels des Zylinders 10 ist der obere Teil der Formvorrichtung 7 vertikal verlagerbar. Die Vertikalführung ist in dem dargestellten Ausführungsbeispiel als Kugelschienenführung ausgebildet und neben dem Zylinder 10 angeordnet.

Zum Ausgleich von Winkelabweichungen bei der Ausrichtung der Palette 2 besitzt jede Formvorrichtung 7 ein Winkelausgleichelement 11. Bei dem Winkelausgleichelement 11 handelt es sich um einen vertikal ausgerichteten Zapfen, an dem die Formvorrichtung 7 drehbar gelagert angeordnet ist. Mittels einer Feder wird die Formvorrichtung 7 in der Position gehalten, die einer optimalen Ausrichtung der Palette 2 auf den Kettenspuren 1 entspricht. In der optimalen Ausrichtung sind die Seitenkanten der Palette 2 orthogonal bzw. parallel zu den Förderspuren 1 ausgerichtet.

Sollte die Palette 2 nicht optimal auf den Kettenspuren 1 abgesetzt worden sein, bleibt die Orientierung der Palette 2 beim Anheben mit den Hubstempeln 5 in der Regel erhalten. Ein eventueller Winkelfehler würde also weiter bestehen. Beim Heranfahren der Formvorrichtung 7 an die Palette 2 richtet sich die Formvorrichtung 7 selbstständig gegenüber der Palette 2 aus. Ist die Palette 2 nicht optimal gegenüber den Kettenspuren 1 ausgerichtet, wird die Formvorrichtung 7 bei Kontakt mit der Palette 2 durch die Palette 2 gegen die Kraft der Feder in die Position gedreht, die der Ausrichtung der Palette 2 entspricht.

In dem dargestellten Ausführungsbeispiel steht die Palette 2 auch auf der mittleren Kettenspur 1 auf. Insoweit muss die Palette 2 zur Durchführung des Verfahrens angehoben werden, damit die Ummantelung 17 im Bereich der beiden äußeren Enden des die Standfüße 20 verbindenden Abstellbrettes 22 für die spätere Durchführung des erfindungsgemäßen Verfahrens nicht mehr eingeklemmt ist.

Liegt die Palette 2 hingegen in der Mitte, d. h. im Bereich der beiden äußeren Enden des die Standfüße 20 verbindenden Abstellbrettes 22, nicht auf, so dass damit die Ummantelung 17 im Bereich der beiden äußeren Enden des die Standfüße 20 verbindenden Abstellbrettes 22 nicht eingeklemmt ist, ist ein Anheben der Palette 2 nicht zwingend erforderlich.

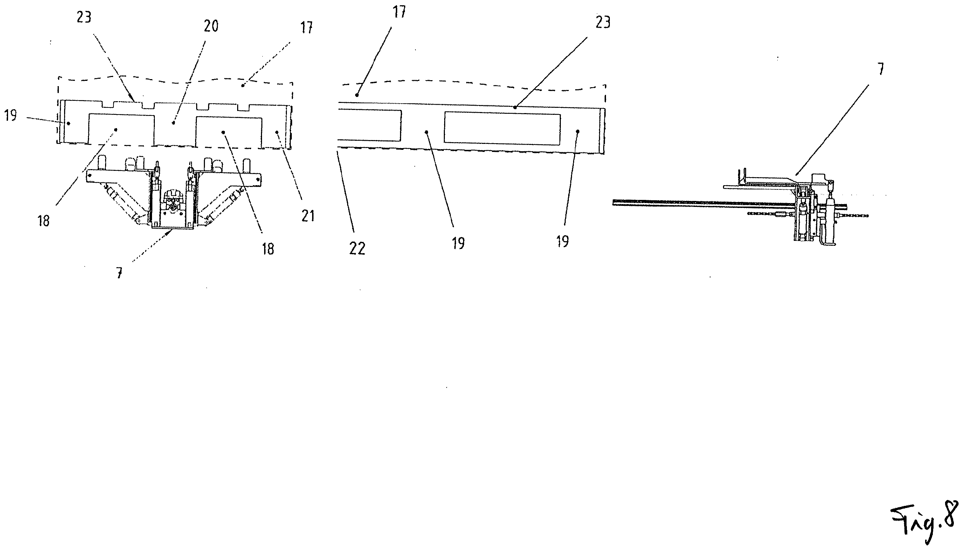

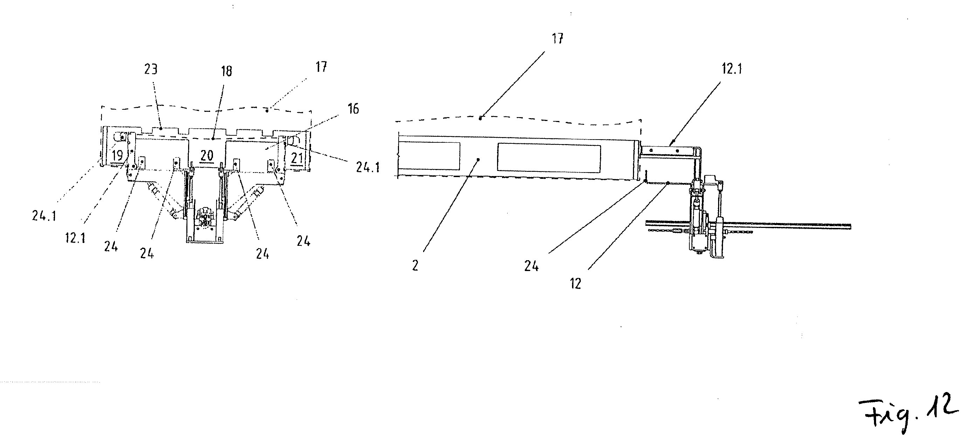

Zum Einbringen der Freiräume in die Ummantelung 17 sind die im Weiteren im Detail beschriebenen Formvorrichtungen 7 vorgesehen. Im Ruhezustand, so wie er in Fig. 8 dargestellt ist, ist jede Formvorrichtung 7 innerhalb des Förderers unter das Förderniveau abgesenkt. Jede Hälfte einer Formvorrichtung 7 umfasst in dem dargestellten Ausführungsbeispiel drei nach oben weisende Formfinger 12 bzw. 12.1, deren jeweiliges Ende als Lasche und/oder als Haken 24, 24.1 ausgebildet ist. Mittels der Laschen und/oder Haken 24, 24.1 kann die Ummantelung 17, wie nachfolgend noch beschrieben werden wird, erfasst, herausgezogen, geformt und zusätzlich insbesondere während des Verfestigens der noch warmen Ummantelung 17 durch Erkalten seitlich gegen die Palette 2 angedrückt werden, was in Fig. 12 dargestellt ist. Die Kontaktbereiche der Formfinger 12 bzw. 12.1 können zumindest in den mit der Ummantelung 17 und/oder mit dem Ummantelungsbereich 18 in Kontakt kommenden Bereichen mit einem Antihaftmaterial und/oder hitzebeständigen Material 27 beschichtet bzw. bestückt sein.

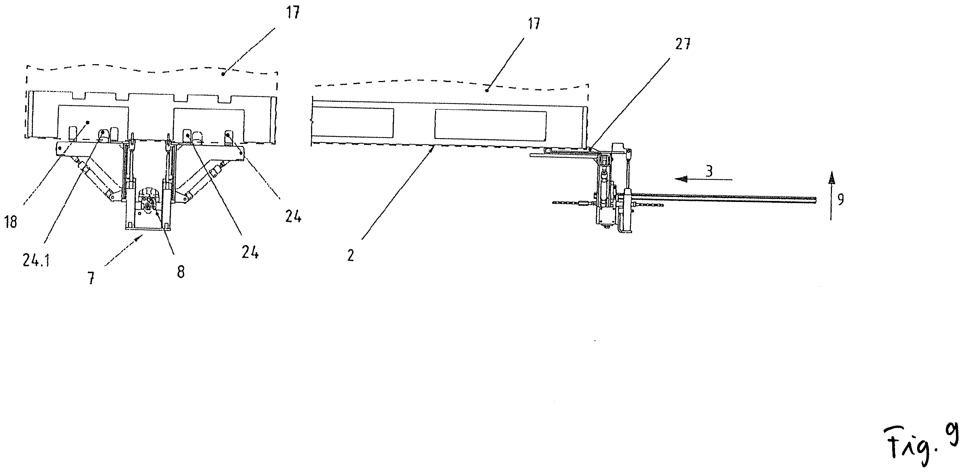

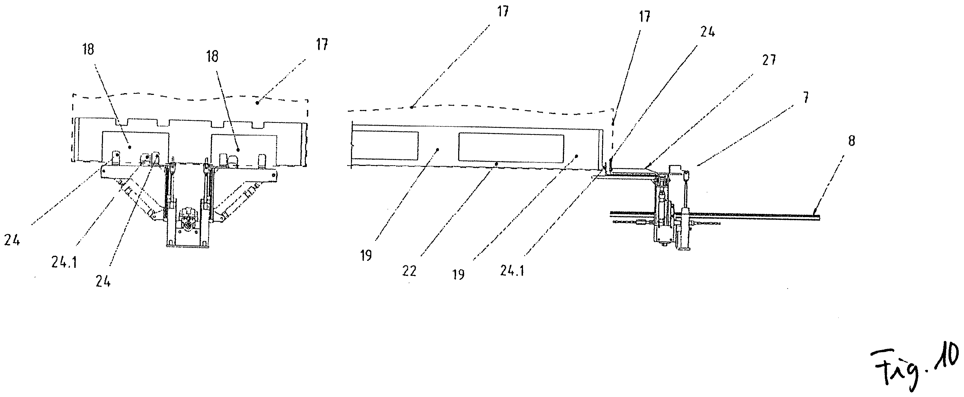

Wie insbesondere den Fig. 9, 10 und 13 zu entnehmen ist, erstreckt sich das Antihaftmaterial und/oder hitzebeständige Material 27 zumindest im Bereich der der Palette 2 zu- und abgewandten Oberfläche jedes Hakens 24.1 sowie im Bereich der Seitenfläche jedes Formfingers 12.1, die in der in den Fig. 9, 10 und 13 dargestellten Position nach oben weist. Es ist aber auch durchaus möglich, dass sich das Antihaftmaterial und/oder hitzebeständige Material 27 auch zumindest im Bereich der der Palette 2 abgewandten Oberfläche jedes Hakens 24 sowie im Bereich der Seitenfläche jedes Formfingers 12, die in der in den Fig. 9 und 10 dargestellten Position nach oben weist, erstreckt.

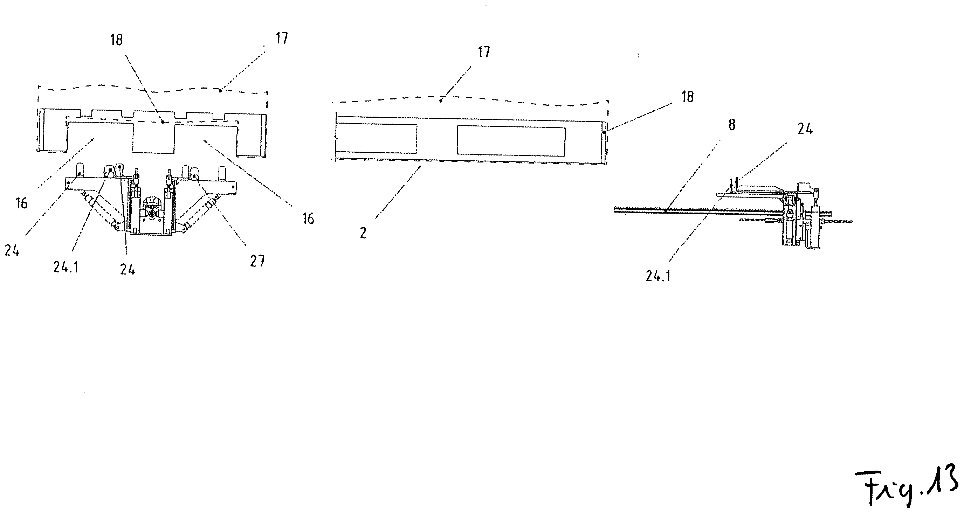

Jede Hälfte der Formvorrichtung 7 weist zwei Formfinger 12 auf, die zum Wegziehen des Ummantelungsbereichs 18 von der Palette 2 weg in horizontaler Richtung verlagerbar sind. Der dritte Formfinger einer jeden Hälfte, nämlich der Formfinger 12.1, ist, wie beispielsweise in den Fig. 7 und 13 zu erkennen ist, verschwenkbar gelagert. Hierzu ist dem Formfinger 12.1 ein Antrieb 13 zugeordnet, so dass der Formfinger 12.1 um die Schwenkachse 14 verlagerbar ist. Wie den Fig. 6 und 7 zu entnehmen ist, ist der Formfinger 12.1 gegenüber den beiden Formfingern 12, die diesem Formfinger 12.1 zugeordnet sind, so ausgebildet, dass dieser Formfinger 12.1 beim Wegziehen nicht mit dem Ummantelungsbereich 18 in Kontakt ist.

Jedem beweglichen Formfinger 12.1 ist ein Anschlag 15 zugeordnet, der eine automatische Einpassung in die Ecken der Fußfreiräume 16 der Palette 2, unabhängig vom Format der Palette 2, ermöglicht. Während der Schwenkbewegung ragt der Anschlag 15 in die Kontur der Palette 2, d. h. in den Fußfreiraum 16, hinein. Kommt der Anschlag 15 beim Verschwenken des Formfingers 12.1 in Kontakt mit dem Standfuß des Fußfreiraumes 16, wird die Schwenkbewegung gestoppt.

In den Fig. 8 bis 13 ist der Verlauf der Ummantelung 17 und des Ummantelungsbereichs 18 in gestrichelten Linien angedeutet. Unter dem Ummantelungsbereich 18 wird der Bereich der Ummantelung 17 verstanden, der sich ohne Durchführung des erfindungsgemäßen Verfahrens vor dem Fußfreiraum 16 der Palette 2 befindet, der durch einen Freiraum in der Ummantelung 17 zugänglich gemacht werden soll. Der deutlicheren Veranschaulichung wegen ist der auf der Palette 2 angeordnete Gutstapel nicht dargestellt. Die vertikale Erstreckung der Ummantelung 17 über die Palette 2 nach oben hinaus ist daher nur angedeutet. Auch ist der Förderer nicht dargestellt.

In den Fig. 8 bis 13 ist eine Palette 2 dargestellt, die drei Reihen bestehend aus je drei klotzartig ausgebildeten Standfüßen 19, 20, 21 aufweist, wobei die drei Standfüße 19 bzw. 20 bzw. 21 in einer Reihe unterseitig durch ein Abstellbrett 22 miteinander verbunden sind. Die Ummantelung 17 umgreift insoweit die Unterseite der beiden äußersten Abstellbretter 22 sowie die beiden äußeren Enden des die Standfüße 20 verbindenden Abstellbrettes 22. Oberseitig weist die Palette 2 eine Standfläche 23 auf, die aus fünf Oberbrettern besteht. Zwischen den Standfüßen 19, 20, 21 und der Standfläche 23 können noch Querbretter angeordnet sein. Der Übersicht wegen sind die vorbeschriebenen Bestandteile der Palette 2 lediglich in Fig. 8 und 12 beziffert.

Bei dem in den Fig. 8 bis 13 dargestellten Ausführungsbeispiel handelt es sich bei den beiden Standfüßen um die äußersten Standfüße 19, 21. Insoweit erstreckt sich der nach oben zu verlagernde Ummantelungsbereich 18 über den mittleren Standfuß 20, so dass damit sowohl der Fußfreiraum 16 zwischen den beiden Standfüßen 19, 20 als auch der Fußfreiraum 16 zwischen den beiden Standfüßen 20, 21 nach Durchführung des erfindungsgemäßen Verfahrens vollständig frei von dem Ummantelungsbereich 18 ist.

Wie oben bereits beschrieben, besteht jede Formvorrichtung 7 aus zwei Hälften, wobei jede Hälfte einem Fußfreiraum 16 zugeordnet ist und zur Schaffung eines Freiraums die vorbeschriebenen zwei Formfinger 12 und den Formfinger 12.1 aufweist. In den Fig. 8 bis 13 ist in der jeweils linken Hälfte eine Ansicht auf die kurze Seite der Palette 2 (in Förderrichtung 3 gesehen) und in der rechten Hälfte eine Ansicht auf die lange Seite der Palette 2 (parallel zur Förderrichtung 3) dargestellt.

Über einen Gutstapel, der auf einer Palette 2 abgestellt ist, wird zunächst in einem vorgelagerten Haubenüberziehplatz eine aus Stretchfolie bestehende Ummantelung 17 übergezogen. Anschließend wird die umhüllte Palette 2 mittels des Förderers zu der erfindungsgemäßen Einrichtung gefördert. Befindet sich die Palette 2 zwischen den Heizeinrichtungen 4, können diese heruntergeschwenkt werden.

In dem in den Figuren dargestellten Ausführungsbeispiel steht die Palette 2 auch auf der mittleren Kettenspur 1 auf. Zur Durchführung des Verfahrens muss die Palette 2 mittels der Palettenhubeinrichtung, die über die Hubstempel 5 verfügt, angehoben werden. Dieses Anheben ist erforderlich, damit zum einen die Ummantelung 17 im Bereich der beiden äußeren Enden des die Standfüße 20 verbindenden Abstellbrettes 22 für die spätere Durchführung des erfindungsgemäßen Verfahrens nicht mehr eingeklemmt ist. Zum anderen können nunmehr die Heizeinrichtungen 4 durch Verlagerung der Haltearme 6 derart aufeinander zu bewegt werden, so dass jede Heizeinrichtung 4 mit ihrer horizontal ausgerichteten Heizfläche 4' unter die Palette 2, d. h. in die in Fig. 1 dargestellte Position, gefahren wird.

Nunmehr erwärmt jede Heizeinrichtung 4 die Ummantelung 17 im Bereich des Ummantelungsbereichs 18. Die Heizfläche 4" erwärmt die Ummantelung 17 im Bereich der betreffenden Außenfläche der Palette 2, während die zweite Heizfläche 4' die Ummantelung 17 im an die Außenfläche angrenzenden Randbereich der Unterseite der Palette 2 mit Wärme beaufschlagt.

Ist der Ummantelungsbereich 18 hinreichend erwärmt, können Haltearme 6 mit den Heizeinrichtungen 4 wieder nach außen verfahren und anschließend hochgeschwenkt werden. Die beiden Formvorrichtungen 7 befinden sich während des Erwärmens außerhalb des Hitzebereichs in ihrer Ruheposition, so wie sie in Fig. 8 dargestellt ist.

Sobald die Haltearme 6 hinreichend hochgeschwenkt sind, können anschließend die Formvorrichtungen 7 von beiden Seiten an die Palette 2 heranbewegt werden. Dies erfolgt zum einen durch eine horizontale Bewegung (Pfeil 3). Ferner werden die Formvorrichtungen 7 in Richtung des Pfeils 9 angehoben. Dies ist in Fig. 9 dargestellt. Bei der horizontalen Verlagerung befinden sich die Formfinger 12, 12.1 noch unterhalb der Ebene der Abstellbretter 22 der Palette 2, so dass die Formfinger 12, 12.1 innerhalb der Kontur der Ummantelung 17 bewegt werden können.

In Fig. 10 sind die Formfinger 12, 12.1 bereits soweit angehoben worden, dass sich die Haken 24, 24.1 oberhalb des unteren Randes der Ummantelung 17 und damit innerhalb der Ummantelung 17 befinden, so dass die Haken 24, 24.1 der Formfinger 12, 12.1 die noch vom Erwärmen warme und weiche Ummantelung 17 hintergreifen. Die Formvorrichtung 7 und damit die Formfinger 12, 12.1 werden anschließend durch den der Führung 8 zugeordneten Antrieb von der Palette 2 weg bewegt, so dass hierdurch der von den Haken 24, 24.1 ergriffene Ummantelungsbereich 18 im noch erwärmten Zustand von der Palette 2 weggezogen wird. Dies ist in den Fig. 10 dargestellt.

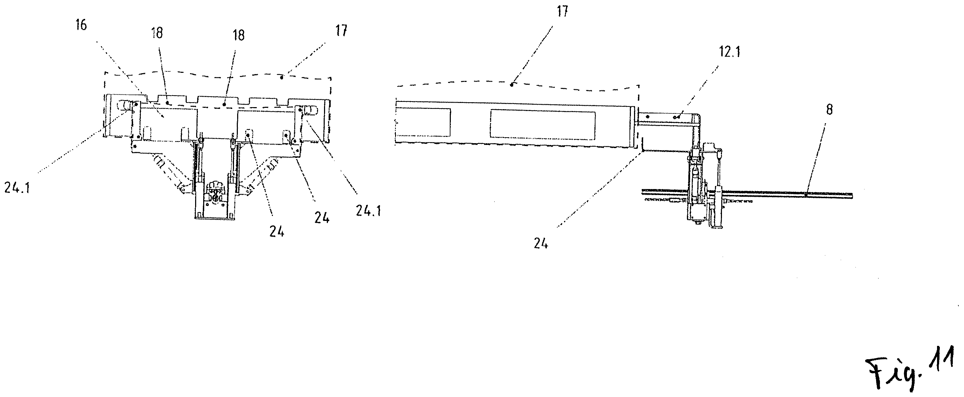

Anschließend wird der Ummantelungsbereich 18 im noch erwärmten Zustand aufwärts verlagert. Dies ist in Fig. 11 dargestellt. Hierzu werden die Formfinger 12.1 mit den Haken 24.1 in einer Schwenkbewegung um ihre Schwenkachse 14 nach oben und nach außen verschwenkt. Dabei wird in dem dargestellten Ausführungsbeispiel die Ummantelung 17 um die jeweilige untere Innenkante der beiden Standfüße 19, 21, d. h. um die rechte untere Innenkante des Standfußes 19 und um die linke untere Innenkante des Standfußes 21, gezogen.

Bei dieser Schwenkbewegung wird der Ummantelungsbereich 18 mitgezogen und hochgezogen. Der Ummantelungsbereich 18 wird dabei nach außen in Richtung der nach außen weisenden Ecke jedes Fußfreiraums 16 verlagert. Durch die beiden hochgeschwenkten Formfinger 12.1 der auf eine gemeinsame Seite der Palette 2 wirkenden Formvorrichtung 7 wird der Ummantelungsbereich 18 auf diese Weise gespannt. Zur Begrenzung der Schwenkbewegung ist jedem Formfinger 24.1 der Anschlag 15 zugeordnet. Da der Anschlag 15 zumindest mit seinem vorderen Ende in die Kontur der Palette 2, d. h. in den Fußfreiraum 16, hineinragt, kommt der Anschlag 15 beim Verschwenken des Formfingers 12.1 mit dem Standfuß des Fußfreiraumes 16 in Kontakt, so dass bei Kontakt die Schwenkbewegung gestoppt wird.

Die Formfinger 12, 12.1 mit der jeweils zugeordneten Lasche 24, 24.1 befinden sich dabei außerhalb der Kontur der Palette 2, d. h. in einem Abstand zu der Außenseite des Standfußes 19, 20, 21, so dass der verformte Ummantelungsbereich 18 von außen um den betreffenden Fußfreiraum 16 bzw. bei dem in den Fig. 8 bis 13 dargestellten Ausführungsbeispiel um die beiden Fußfreiräume 16 "herumgelegt" wird. Im aufgespannten Zustand wird jede Formvorrichtung 7 wieder horizontal in Richtung der orthogonal zur Förderrichtung 3 der Palette 2 ausgerichteten Seite der Palette 2 verlagert. Da die beiden Formfinger 12.1 einer Formvorrichtung 7 länger als die vier Formfinger 12 dieser Formvorrichtung 7 sind und damit gegenüber den Formfingern 12 in Richtung der Palette 2 gesehen vorstehen, kommen die Formfinger 12.1 mit ihrer der Palette 2 zugewandten Fläche der Haken 24.1 in Folge der Horizontalbewegung mit der Standfläche 23 bzw. der Außenseite des in dem Verfahrweg befindlichen Standfußes 19, 20, 21 in Kontakt. Hierzu ist u. a. die der Palette 2 zugewandte Fläche jedes Hakens 24.1, wie zuvor in Bezug auf die Fig. 9 und 10 beschrieben, vorzugsweise mit dem Antihaftmaterial und/oder hitzebeständigen Material 27 beschichtet.

Durch die Haken 24.1 wird die noch nicht erkaltete doppellagige Ummantelung 17 gegen die Standfläche 23 bzw. die Außenseite des Standfußes 19, 20, 21 der Palette 2 gedrückt, was in Fig. 12 dargestellt ist. In Folge des horizontalen Verfahrens wird der aufgespannte Ummantelungsbereich 18 und die angrenzende Ummantelung 17 wieder näher an die Palette 2 verlagert und verbindet sich beim Erkalten mit der um den Standfuß 19, 20, 21 gelegten Ummantelung 17, bevor sie aushärtet, so dass hierdurch eine zusätzliche Stabilisierung durch den verbundenen Ummantelungsbereich 18 mit der angrenzenden Ummantelung 17 und/oder der Palette 2 erreicht wird. Bei diesem Andrückvorgang wirkt das Winkelausgleichselement 11.

In der gespannten Position verfestigt sich dann der Ummantelungsbereich 18 beim Abkühlen. Infolgedessen ist der betreffende Fußfreiraum 16 dauerhaft vollständig frei von dem Ummantelungsbereich 18. Durch das Aufspannen werden die Fußfreiräume 16 unter der Palette 2 vollständig freigestellt. Bei dem dargestellten Ausführungsbeispiel ist auch keine Ummantelung 17 mehr im Bereich der beiden äußeren Enden des die Standfüße 20 verbindenden Abstellbrettes 22.

Sofern die Ummantelung 17 an den beiden zu formenden Seiten (Außenflächen), bei denen es sich in dem dargestellten Ausführungsbeispiel um die kurzen Stirnseiten der Palette 2 handelt, beim Wegziehen des Ummantelungsbereichs 18 nach außen und/oder beim nach oben Verlagern des Ummantelungsbereichs 18 zusätzlich noch fixiert werden soll, kann beispielsweise ein nicht dargestelltes, in Richtung der Palette 2 verlagerbares, stiftartig ausgebildetes Fixierelement vorgesehen sein. Mittels des Fixierelementes kann die Ummantelung 17 gegen die Palette 2 gedrückt werden. Durch dieses stirnseitige Fixieren wird eine unerwünschte Halbmondbildung vermieden.

In dem dargestellten Ausführungsbeispiel besteht die mittlere Kettenspur 1 aus zwei im Abstand zueinander parallel verlaufenden Ketten. Ein entsprechendes Fixierelement kann sich zwischen den beiden Ketten der mittleren Kettenspur 1 befinden. Dann wirkt das Fixierelement in der Mitte der Palette 2 etwa in Höhe der Standfläche 23 oder etwas tiefer. Das Fixierelement kann beispielsweise durch eine Schwenkbewegung aus seiner Ruheposition, in der es nicht aus der Ebene des Kettenförderers herausragt, in seine Fixierposition verlagert werden. Die Schwenkachse und der zugehörige Antrieb eines entsprechend ausgebildeten Fixierelementes können Bestandteil des Förderers sein. Es ist aber auch durchaus möglich, dass die Schwenkachse und der zugehörige Antrieb des Fixierelementes Bestandteil der Formvorrichtung 7 sind.

Auch kann sich das Fixierelement beispielsweise seitlich in einem geringen Abstand zur mittleren Kettenspur 1 befinden. Dann wirkt es nicht genau auf die Mitte der Palette 2, sofern die Schwenkebene des Fixierelementes parallel zur Achse der Kettenspur 1 und der Förderrichtung 3 ist. Sofern jedoch die Schwenkebene des Fixierelementes nicht parallel zur Achse der Kettenspur 1 und der Förderrichtung 3 ist, ist auch in diesem Fall ein Kontakt in der Mitte der Palette 2 möglich. Unabhängig von der Ausrichtung der Schwenkebene des Fixierelementes wirkt das Fixierelement etwa in Höhe der Standfläche 23 oder etwas tiefer auf die Palette 2.

Es ist selbstverständlich auch möglich, dass sich auf jeder Seite der mittleren Kettenspur 1 jeweils ein Fixierelement befindet, so dass auf diese Weise die Ummantelung 17 an zwei Stellen gegen die Palette 2 gedrückt wird.

Nachdem der betreffende Fußfreiraum 16 dauerhaft vollständig frei von dem Ummantelungsbereich 18 gestellt ist, werden die Formfinger 12.1 wieder nach unten zurück verschwenkt. Diese Situation ist in Fig. 13 dargestellt. Wie Fig. 13 zu entnehmen ist, sind die Formvorrichtungen 7 in dieser Darstellung bereits wieder abgesenkt und nach außen gefahren.

Selbstverständlich ist es auch möglich, dass nur eine Formvorrichtung 7 vorgesehen ist, so dass insoweit nur auf einer Seite ein Freiraum in die Ummantelung 17 eingebracht werden kann. In diesem Fall ist auch nur eine Heizeinrichtung erforderlich.

## Patentansprüche

1. Verfahren zur Schaffung zumindest eines Freiraums in einer Ummantelung (17), welche einen auf einer Palette (2) angeordneten Gutstapel sichert, wobei die Palette (2) eine oberseitige Standfläche (23) als Auflage für den Gutstapel sowie mehrere unterseitige und im Abstand zueinander unter Bildung von Fußfreiräumen (16) angeordnete Standfüße (19, 20, 21) aufweist, und wobei die Ummantelung (17) zumindest teilweise die Unterseite der im Bereich der vier Außenkanten der Palette (2) angeordneten Standfüße (19, 20, 21) untergreift und wobei zumindest ein Freiraum in den zwischen zwei Standfüßen (19 bzw. 20 bzw. 21), die in einer Reihe mit zumindest zwei Standfüßen (19, 20, 21) angeordnet sind, liegenden Ummantelungsbereich (18) eingebracht wird, wobei zumindest ein Freiraum derart erzeugt wird, dass der Ummantelungsbereich (18) zunächst erwärmt wird, dass dann der erwärmte Ummantelungsbereich (18) von der Palette (2) weggezogen wird und anschließend im noch erwärmten Zustand aufwärts verlagert wird, wobei dann der nach oben verlagerte Ummantelungsbereich (18) durch Abkühlen in seiner nach oben verlagerten Position fixiert wird, **dadurch gekennzeichnet, dass** die Ummantelung (17) aus Stretchfolie besteht und dass der erwärmte Ummantelungsbereich (18) erst dann von der Palette (2) weggezogen wird, wenn das Erwärmen des Ummantelungsbereiches (18) vollständig abgeschlossen ist.

2. Verfahren nach dem vorhergehenden Anspruch, **dadurch gekennzeichnet, dass** die Palette (2) vor dem Erwärmen des Ummantelungsbereichs (18) angehoben wird.

3. Verfahren nach einem der vorhergehenden Ansprüche, **dadurch gekennzeichnet, dass** die Aufwärtsverlagerung bis in den Bereich der Standfläche (23), vorzugsweise bis etwas unterhalb der Standfläche (23), erfolgt.

4. Verfahren nach einem der vorhergehenden Ansprüche, **dadurch gekennzeichnet, dass** beim nach oben Verlagern des Ummantelungsbereichs (18) die Ummantelung (17) um die jeweilige untere Innenkante der beiden Standfüße (19 bzw. 20 bzw. 21) gezogen wird.

5. Verfahren nach einem der vorhergehenden Ansprüche, **dadurch gekennzeichnet, dass** die beiden Standfüße (19, 20, 21) direkt benachbart oder die äußersten Standfüße einer Reihe sind.

6. Verfahren nach einem der vorhergehenden Ansprüche, **dadurch gekennzeichnet, dass** die Ummantelung (17) an der Unterseite der beiden Standfüße (19, 20, 21) vor und/oder nach dem Wegziehen des Ummantelungsbereichs (18) von der Palette (2) und/oder vor und/oder nach dem nach oben Verlagern des Ummantelungsbereichs (18) fixiert wird.

7. Verfahren nach einem der Ansprüche 1 bis 5, **dadurch gekennzeichnet, dass** das Wegziehen und/oder das nach oben Verlagern des Ummantelungsbereichs (18) von der Palette (2) derart erfolgt, dass die Ummantelung (17) noch an der der Unterseite der beiden Standfüße (19, 20, 21) fixiert bleibt.

8. Verfahren nach einem der vorhergehenden Ansprüche, **dadurch gekennzeichnet, dass** als Ummantelung (17) eine Stretchhaube oder Spannhaube verwendet wird.

9. Verfahren nach einem der vorhergehenden Ansprüche, **dadurch gekennzeichnet, dass** zumindest ein Teilbereich der Ummantelung (17) wenigstens in zumindest einem Bereich nahe einem Fußfreiraum (16) oberhalb des Ummantelungsbereichs (18) gegenüber der Palette (2) von außen in horizontaler Richtung, vorzugsweise durch Andrücken, zumindest vorübergehend während des Wegziehens und/oder des nach oben Verlagerns des Ummantelungsbereichs (18) fixiert wird.

10. Verfahren nach einem der vorhergehenden Ansprüche, **dadurch gekennzeichnet, dass** zumindest der nach oben verlagerte und im noch erwärmten Zustand befindliche Ummantelungsbereich (18) vor dem Abkühlen wieder in Richtung der Palette (2) verlagert wird.

11. Verfahren nach dem vorhergehenden Anspruch, **dadurch gekennzeichnet, dass** die Verlagerung wieder in Richtung der Palette (2) zumindest des nach oben verlagerten und im noch erwärmten Zustand befindlichen Ummantelungsbereiches (18) vor dem Abkühlen soweit in Richtung der Palette (2) erfolgt, dass der aufgespannte Ummantelungsbereich (18) und/oder die jeweils seitlich an den Ummantelungsbereich (18) anschließenden Teilbereiche der Ummantelung (17) rückseitig zumindest etwas gegen zumindest einen Standfuß (19, 20, 21) und/oder die Standfläche (23) der Palette (2) gedrückt wird(werden).

12. Verfahren nach einem der vorhergehenden Ansprüche, **dadurch gekennzeichnet, dass** der erwärmte Ummantelungsbereich (18) nach Abschluss der Verlagerung nach oben, vorzugsweise mittels eines Luftstroms, gekühlt wird.

13. Formvorrichtung (7) zur Durchführung eines Verfahrens zur Schaffung zumindest eines Freiraums in einer aus Stretchfolie bestehenden Ummantelung (17), welche einen auf einer Palette (2) angeordneten Gutstapel sichert, wobei zusätzlich zu der Formvorrichtung (7) für ein vorheriges Erwärmen des zu verlagernden Ummantelungsbereiches (18) zumindest eine, vorzugsweise elektrisch betriebene, Heizeinrichtung (4) vorgesehen ist, wobei die Palette (2) eine oberseitige Standfläche (23) als Auflage für den Gutstapel sowie mehrere unterseitige und im Abstand zueinander unter Bildung von Fußfreiräumen (16) angeordnete Standfüße (19, 20, 21) aufweist, und wobei die Ummantelung (17) zumindest teilweise die Unterseite der im Bereich der vier Außenkanten der Palette (2) angeordneten Standfüße (19, 20, 21) untergreift und wobei zumindest ein Freiraum in den zwischen zwei Standfüßen (19 bzw. 20 bzw. 21), die in einer Reihe mit zumindest zwei Standfüßen (19, 20, 21) angeordnet sind, liegenden Ummantelungsbereich (18) eingebracht wird, **dadurch gekennzeichnet, dass** für die Durchführung des Verfahrens nach einem der Ansprüche 1 bis 12 zumindest zwei Formfinger (12.1) vorgesehen sind, die zum nach oben Verlagern des Ummantelungsbereichs (18) in vertikaler Richtung verlagerbar sind und auch zum vorherigen Wegziehen des Ummantelungsbereichs (18) von der Palette (2) weg in horizontaler Richtung verlagerbar sind.

14. Formvorrichtung (7) nach dem vorhergehenden Anspruch, **dadurch gekennzeichnet, dass** zumindest eine Heizeinrichtung (4) wenigstens zwei in einem Winkel, vorzugsweise in einem rechten Winkel, zueinander ausgerichtete Heizflächen (4', 4") umfasst, wobei die eine Heizfläche (4") die Ummantelung (17) im Bereich der betreffenden Außenfläche der Palette (2) und die andere Heizfläche (4') die Ummantelung (17) im an die Außenfläche angrenzenden Randbereich der Unterseite der Palette (2) mit Wärme beaufschlagt.

15. Formvorrichtung (7) nach einem der Ansprüche 13 oder 14, **dadurch gekennzeichnet, dass** zumindest eine Heizeinrichtung (4) zwischen einer Heizposition und einer Parkposition, vorzugsweise durch Verschwenken, verlagerbar ist.

16. Formvorrichtung (7) nach einem der Ansprüche 13 bis 15, **dadurch gekennzeichnet, dass** zumindest zwei auf einander zuweisende Heizeinrichtungen (4) vorgesehen sind, wobei der Abstand zwischen den beiden Heizeinrichtungen (4) zumindest etwas größer ist als der Abstand zwischen den beiden gegenüberliegenden Außenflächen der Palette (2), in die jeweils zumindest ein Freiraum eingebracht werden soll.

17. Formvorrichtung (7) nach einem der Ansprüche 13 bis 16, **dadurch gekennzeichnet, dass** der Abstand zwischen den Heizeinrichtungen (4) veränderbar ist.

18. Formvorrichtung (7) nach einem der Ansprüche 13 bis 17, **dadurch gekennzeichnet, dass** jede Heizeinrichtung (4) an einem Haltearm (6) angeordnet ist und dass die Haltearme (6) über ein Verbindungselement (25) miteinander verbunden sind.

19. Formvorrichtung (7) nach einem der Ansprüche 13 bis 18, **dadurch gekennzeichnet, dass** zumindest ein Formfinger (12.1) um eine parallel zum horizontalen Verfahrweg ausgerichtete Schwenkachse (14) verschwenkbar gelagert ist, so dass dieser Formfinger (12.1) zum Formen mittels eines Antriebs nach oben und nach außen verschwenkbar ist.

20. Formvorrichtung (7) nach einem der Ansprüche 13 bis 19, **dadurch gekennzeichnet, dass** die Formvorrichtung (7) zumindest zwei Formfinger (12) aufweist, die zum Wegziehen des Ummantelungsbereichs (18) von der Palette (2) weg in horizontaler Richtung verlagerbar sind.

21. Formvorrichtung (7) nach dem vorhergehenden Anspruch, **dadurch gekennzeichnet, dass** mindestens ein Formfinger (12.1) gegenüber dem (den) Formfinger(n) (12), die diesem Formfinger (12.1) zugeordnet ist (sind), so ausgebildet und/oder angeordnet ist, dass dieser Formfinger (12.1) beim Wegziehen nicht mit dem Ummantelungsbereich (18) in Kontakt ist.

22. Formvorrichtung (7) nach einem der Ansprüche 13 bis 21, **dadurch gekennzeichnet, dass** die Formvorrichtung (7) für eine horizontale Verlagerung eine Führung (8) und einen Antrieb aufweist und/oder die Formvorrichtung (7) für eine vertikale Verlagerung eine Vertikalführung und einen Antrieb aufweist.

23. Formvorrichtung (7) nach einem der Ansprüche 13 bis 22, **dadurch gekennzeichnet, dass** das Ende zumindest eines Formfingers (12, 12.1) als Lasche und/oder als Haken (24, 24.1) ausgebildet ist.

24. Formvorrichtung (7) nach einem der Ansprüche 13 bis 23, **dadurch gekennzeichnet, dass** bei zumindest einem Formfinger (12, 12.1) zumindest ein, vorzugsweise jeder, mit der Ummantelung (17) und/oder mit dem Ummantelungsbereich (18) in Kontakt kommende Bereich mit einem Antihaftmaterial und/oder hitzebeständigen Material (27) beschichtet und/oder bestückt ist.

25. Formvorrichtung (7) nach einem der Ansprüche 13 bis 24, **dadurch gekennzeichnet, dass** die Formvorrichtung (7) aus zwei Hälften besteht, wobei jede Hälfte zumindest jeweils einen Formfinger (12.1) und gegebenenfalls auch zumindest einen Formfinger (12) aufweist und vorzugsweise jede Hälfte spiegelbildlich aufgebaut ist und wobei vorzugsweise beide Hälften synchron verlagerbar sind.

26. Formvorrichtung (7) nach einem der Ansprüche 13 bis 25, **dadurch gekennzeichnet, dass** zumindest einem Formfinger (12.1) ein den Schwenkweg dieses Formfingers (12.1) begrenzender Anschlag (15) zugordnet ist, der sich parallel zum horizontalen Verfahrweg in entgegengesetzt weisender Richtung über den (die) diesem Formfinger (12.1) zugeordneten Formfinger (12) vorstehend erstreckt.

27. Formvorrichtung (7) nach einem der Ansprüche 13 bis 26, **dadurch gekennzeichnet, dass** zur Anpassung der Ausrichtung der Formvorrichtung (7) gegenüber der Palette (2) ein, vorzugsweise als vertikal ausgerichteter Zapfen ausgebildetes, Winkelausgleichelement (11) vorgesehen ist.

28. Formvorrichtung (7) nach einem der Ansprüche 13 bis 27, **dadurch gekennzeichnet, dass** zur Fixierung der Ummantelung (17) beim Wegziehen und/oder beim nach oben Verlagern des Ummantelungsbereichs (18) gegenüber der Palette 2, vorzugsweise im Bereich der zu formenden Seite der Ummantelung (17), ein in Richtung der Palette (2) verlagerbares Fixierelement vorgesehen ist.

## Claims

1. Method for creating at least one clearance in a sheath (17), which secures a stack of articles arranged on a pallet (2), wherein the pallet (2) comprises a standing surface (23) on its upper side as a surface for the stack of articles, as well as several standing feet (19, 20, 21) arranged on the under side and at a distance interval from one another, with the formation of foot-free spaces (16), and wherein the sheath (17) engages at least partially underneath the under side of the standing feet (19, 20, 21) arranged in the region of the four outer edges of the pallet (2), and wherein at least one clearance is introduced into the sheathing region (18) lying between two standing feet (19 and 20 and 21 respectively), which are arranged in a row with at least two standing feet (19, 20, 21), wherein at least one clearance is produced in such a way that the sheathing region (18) is first heated, that the heated sheathing region (18) is then drawn off from the pallet (2), and then, in the still heated state, is displaced upwards, wherein the sheathing region (18) which is displaced upwards is then fixed, by cooling, in its upwards displaced position, **characterised in that** the sheath (17) consists of stretch film, and that the sheathing region (18) is only drawn off from the pallet (2) when the heating of the sheathing region (18) has been entirely concluded.

2. Method according to the preceding claim, **characterised in that** the pallet (2) is raised before the heating of the sheathing region (18).

3. Method according to any one of the preceding claims, **characterised in that** the upwards displacement is carried out as far as into the region of the standing surface (23), preferably as far as approximately underneath the standing surface (23).

4. Method according to any one of the preceding claims, **characterised in that,** during the upwards displacement of the sheathing region (18), the sheath (17) is drawn around the respective lower inner edge of the two standing feet (19 or 20 or 21).

5. Method according to any one of the preceding claims, **characterised in that** the two standing feet (19, 20, 21) are directly adjacent, or are the outermost standing feet of a row.

6. Method according to any one of the preceding claims, **characterised in that** the sheath (17) is fixed to the under side of the two standing feet (19, 20, 21) before and/or after the drawing away of the sheathing region (18) from the pallet (2), and/or after the upwards displacement of the sheathing region (18).

7. Method according to any one of claims 1 to 5, **characterised in that** the drawing away and/or the upwards displacement of the sheathing region (18) from the pallet (2) takes place in such a way that the sheath (17) still remains fixed to the under side of the two standing feet (19, 20, 21).

8. Method according to any one of the preceding claims, **characterised in that,** as the sheath (17), a stretch hood cover or tensioned hood cover is used.

9. Method according to any one of the preceding claims, **characterised in that** at least one part region of the sheath (17) is fixed, at least in one region close to a foot-free space (16) above the sheathing region (18) opposite the pallet (2) from the outside in the horizontal direction, preferably by pressing, at least temporarily, during the drawing off and/or after the upwards displacement of the sheathing region (18).

10. Method according to any one of the preceding claims, **characterised in that** at least the sheathing region (18), displaced upwards and in the still heated state, is again displaced, before cooling, in the direction of the pallet (2).

11. Method according to the preceding claim, **characterised in that** the displacement again takes place in the direction of the pallet (2) of the sheathing region (18), which is at least displaced upwards and is still in the heated state, before the cooling, sufficiently far in the direction of the pallet (2) that the tensioned sheathing region (18), and/or the respective side regions of the sheath (17) which connect to the sheathing region (18), is/are pressed on the rear side at least approximately against at least one standing foot (19, 20, 21) and/or against the standing surface (23) of the pallet (2).

12. Method according to any one of the preceding claims, **characterised in that** the heated sheathing region (18) is cooled after the conclusion of the displacement upwards, preferably by means of an air flow.

13. A forming device (7) for carrying out a method for creating at least one clearance in a sheathing region (17) consisting of a stretch film, which secures a stack of articles arranged on a pallet (2), wherein, in addition to the forming device (7), for the purpose of heating in advance of the sheathing region (18) which is to be moved, at least one heating device (4), preferably electrically driven, is provided, wherein the pallet (2) comprises an upper side standing surface (23) as a surface for the stack of articles, as well as several standing feet (19, 20, 21) arranged on the under side and at a distance interval from one another, with the formation of foot-free spaces (16), and wherein the sheath (17) engages at least partially underneath the under side of the standing feet (19, 20, 21) arranged in the region of the four outer edges of the pallet (2), and wherein at least one clearance is introduced into the sheathing region (18) located in the sheathing region (18) lying between two standing feet (19 or 20 or 21), which are arranged in a row with at least two standing feet (19, 20, 21), **characterised in that,** for carrying out the method according to any one of claims 1 to 12, at least two forming fingers (12.1) are provided, which, after the displacement of the sheathing region (18), can be displaced in a vertical direction, and can also be displaced in the horizontal direction for the prior drawing of the sheathing region (18) away from the pallet (2).

14. A forming device (7) in accordance with the preceding claim, **characterised in that** at least one heating device (4) comprises at least two heating surfaces (4', 4") aligned at an angle to one another, preferably a right angle, wherein the one heating surface (4") imposes heat on the sheath (17) in the region of the outer surface concerned of the pallet (2), and the other heating surface (4') imposes heat in the edge region of the under side of the pallet (2) adjacent to the outer surface.

15. A forming device (7) in accordance with any one of claims 13 or 14, **characterised in that** at least one heating device (4) can be displaced between a heating position and a parked position, preferably by pivoting.

16. A forming device (7) in accordance with any one of claims 13 to 15, **characterised in that** at least two heating devices (4) are provided facing one another, wherein the distance interval between the two heating devices (4) is at least somewhat greater than the distance interval between the two opposing outer surfaces of the pallet (2), into which it is intended that at least one clearance should be introduced.

17. A forming device (7) in accordance with any one of claims 13 to 16, **characterised in that** the distance interval between the heating devices (4) can be changed.

18. A forming device (7) in accordance with any one of claims 13 to 17, **characterised in that** each heating device (4) is arranged on a holding arm (6), and that the holding arms (6) are connected to one another by means of a connection element (25).

19. A forming device (7) in accordance with any one of claims 13 to 18, **characterised in that** at least one forming finger (12.1) is mounted such as to be able to pivot about a pivot axis (14) aligned parallel to the horizontal travel path, such that this forming finger (12.1) can be pivoted upwards and outwards by means of a drive in order to carry out forming.

20. A forming device (7) in accordance with any one of claims 13 to 19, **characterised in that** the forming device (7) comprises at least two forming fingers (12), which, in order to draw the sheathing region (18) away from the pallet (2), are capable of being moved in the horizontal direction.

21. A forming device (7) in accordance with any one of the preceding claims, **characterised in that** at least one forming finger (12.1) is arranged opposite the forming finger(s) (12) which is (are) assigned to this forming finger (12.1), and is configured and/or arranged in such a way that this forming finger (12.1) is not in contact with the sheathing region (18) when it is drawn away.

22. A forming device (7) in accordance with any one of claims 13 to 21, **characterised in that** the forming device (7) comprises, for a horizontal displacement, a guide element (8) and a drive, and/or the forming device (7) comprises, for a vertical displacement, a vertical guide element and a drive.

23. A forming device (7) in accordance with any one of claims 13 to 22, **characterised in that** the end of at least one forming finger (12, 12.1) is configured as a tab and/or as a hook (24, 24.1).

24. A forming device (7) in accordance with any one of claims 13 to 23, **characterised in that,** with at least one forming finger (12, 12.1), at least one area, and preferably each area, which comes in contact with the sheath (17) and/or with the sheath region (18) is coated and/or fitted with an anti-adhesive material and/or heat-resistant material (27).

25. A forming device (7) in accordance with any one of claims 13 to 24, **characterised in that** the forming device (7) consists of two halves, wherein each half comprises in each case at least one forming finger (12.1) and, if appropriate, also at least one forming finger (12), and preferably each half is structured as a mirror-image, and wherein preferably both halves can be displaced synchronously.

26. A forming device (7) in accordance with any one of claims 13 to 25, **characterised in that** a stop (15) is assigned at least to one forming finger (12.1) which delimits the pivot path of this forming finger (12.1), which extends parallel to the horizontal travel path, projecting in the opposite direction, over the forming finger(s) (12) assigned to this forming finger (12.1).

27. A forming device (7) in accordance with any one of claims 13 to 26, **characterised in that,** in order to adjust the alignment of the forming device (7) in relation to the pallet (2), an angle compensation element (11) is provided, preferably configured as a vertically aligned journal element.

28. A forming device (7) in accordance with any one of claims 13 to 27, **characterised in that,** for the fixing of the sheath (17) during drawing away and/or during the upwards displacement of the sheath region (18) in relation to the pallet (2), preferably in the region of the side of the sheath (17) which is to be formed, a fixing element is provided, which can be displaced in the direction of the pallet (2).

## Revendications

1. Procédé pour créer au moins un espace libre dans un enveloppement (17) qui cale une pile de marchandises disposée sur une palette (2), la palette (2) possédant une surface de pose (23) côté supérieur en tant que support pour la pile de marchandises ainsi que plusieurs pieds d'appui (19, 20, 21) côté inférieur disposés espacés les uns des autres en formant des espaces libres de pied (16), et l'enveloppement (17) venant au moins partiellement en prise par dessous avec le côté inférieur des pieds d'appui (19, 20, 21) disposés dans la zone des quatre bords extérieurs de la palette (2) et au moins un espace libre étant incorporé dans la zone d'enveloppement (18) qui se trouve entre deux pieds d'appui (19 et/ou 20 et/ou 21), qui sont disposés en une rangée avec au moins deux pieds d'appui (19, 20, 21), au moins un espace libre étant produit de telle sorte que la zone d'enveloppement (18) est tout d'abord chauffée, que la zone d'enveloppement (18) chauffée est ensuite retirée de la palette (2) et qu'elle est ensuite déplacée vers le haut en étant encore à l'état chauffé, la zone d'enveloppement (18) déplacée vers le haut étant ensuite calée dans sa position déplacée vers le haut par refroidissement, **caractérisé en ce que** l'enveloppement (17) se compose de film étirable et **en ce que** la zone d'enveloppement (18) chauffée n'est retirée de la palette (2) que lorsque le chauffage de la zone d'enveloppement (18) est entièrement terminé.

2. Procédé selon la revendication précédente, **caractérisé en ce que** la palette (2) est soulevée avant le chauffage de la zone d'enveloppement (18).

3. Procédé selon l'une des revendications précédentes, **caractérisé en ce que** le déplacement vers le haut est effectué jusque dans la zone de la surface de pose (23), de préférence jusqu'à peu près au-dessous de la surface de pose (23).

4. Procédé selon l'une des revendications précédentes, **caractérisé en ce que** lors du déplacement vers le haut de la zone d'enveloppement (18), l'enveloppement (17) est tiré autour du bord intérieur inférieur respectif des deux pieds d'appui (19 et/ou 20 et/ou 21).

5. Procédé selon l'une des revendications précédentes, **caractérisé en ce que** les deux pieds d'appui (19, 20, 21) sont directement voisins ou sont les pieds d'appui les plus à l'extérieur d'une rangée.

6. Procédé selon l'une des revendications précédentes, **caractérisé en ce que** l'enveloppement (17) est calé au niveau du côté inférieur des deux pieds d'appui (19, 20, 21) avant et/ou après le retrait de la zone d'enveloppement (18) de la palette (2) et/ou avant ou après le déplacement vers le haut de la zone d'enveloppement (18).

7. Procédé selon l'une des revendications 1 à 5, **caractérisé en ce que** le retrait de la zone d'enveloppement (18) de la palette (2) et/ou son déplacement vers le haut depuis celle-ci est effectué de telle sorte que l'enveloppement (17) reste encore calé au niveau du côté inférieur des deux pieds d'appui (19, 20, 21).

8. Procédé selon l'une des revendications précédentes, **caractérisé en ce que** l'enveloppement (17) utilisé est une housse étirable ou une housse à tendre.

9. Procédé selon l'une des revendications précédentes, **caractérisé en ce qu'**au moins une zone partielle de l'enveloppement (17) est au moins calée dans au moins une zone à proximité d'un espace libre de pied (16) au-dessus de la zone d'enveloppement (18) par rapport à la palette (2) depuis l'extérieur dans la direction horizontale, de préférence par pressage, au moins provisoirement pendant le retrait et/ou le déplacement vers le haut de la zone d'enveloppement (18).

10. Procédé selon l'une des revendications précédentes, **caractérisé en ce qu'**au moins la zone d'enveloppement (18) déplacée vers le haut et se trouvant encore à l'état chauffé est de nouveau déplacée en direction de la palette (2) avant le refroidissement.

11. Procédé selon la revendication précédente, **caractérisé en ce que** le déplacement de nouveau en direction de la palette (2) d'au moins la zone d'enveloppement (18) déplacée vers le haut et se trouvant encore à l'état chauffé est effectué avant le refroidissement suffisamment loin en direction de la palette (2) pour que la zone d'enveloppement (18) tendue et/ou les zones partielles de l'enveloppement (17) qui se rattachent respectivement latéralement à la zone d'enveloppement (18) est (sont) repoussée(s) vers l'arrière au moins approximativement contre au moins un pied d'appui (19, 20, 21) et/ou la surface de pose (23) de la palette (2).

12. Procédé selon l'une des revendications précédentes, **caractérisé en ce que** la zone d'enveloppement (18) chauffée est refroidie après avoir terminé le déplacement vers le haut, de préférence au moyen d'un flux d'air.

13. Arrangement de façonnage (7) pour mettre en œuvre un procédé pour créer au moins un espace libre dans un enveloppement (17) composé d'un film étirable qui cale une pile de marchandises disposée sur une palette (2), au moins un dispositif de chauffage (4), de préférence à fonctionnement électrique, étant prévu en plus de l'arrangement de façonnage (7) pour un chauffage préalable de la zone d'enveloppement (18) à déplacer, la palette (2) possédant une surface de pose (23) côté supérieur en tant que support pour la pile de marchandises ainsi que plusieurs pieds d'appui (19, 20, 21) côté inférieur disposés espacés les uns des autres en formant des espaces libres de pied (16), et l'enveloppement (17) venant au moins partiellement en prise par dessous avec le côté inférieur des pieds d'appui (19, 20, 21) disposés dans la zone des quatre bords extérieurs de la palette (2) et au moins un espace libre étant incorporé dans la zone d'enveloppement (18) qui se trouve entre deux pieds d'appui (19 et/ou 20 et/ou 21), qui sont disposés en une rangée avec au moins deux pieds d'appui (19, 20, 21), **caractérisé en ce qu'**au moins deux doigts de façonnage (12.1) sont présents pour mettre en œuvre le procédé selon l'une des revendications 1 à 12, lesquels peuvent être déplacés dans la direction verticale en vue de déplacer la zone d'enveloppement (18) vers le haut et peuvent également être déplacés dans la direction horizontale en vue de retirer préalablement la zone d'enveloppement (18) de la palette (2).

14. Arrangement de façonnage (7)selon la revendication précédente, **caractérisé en ce qu'**au moins un dispositif de chauffage (4) comporte au moins deux surfaces chauffantes (4', 4") orientées selon un certain angle l'une par rapport à l'autre, de préférence un angle droit, une surface chauffante (4") soumettant l'enveloppement (17) à de la chaleur dans la zone de la surface extérieure concernée de la palette (2) et l'autre surface chauffante (4') soumettant l'enveloppement (17) dans la zone de bordure du côté inférieur de la palette (2), adjacente à la surface extérieure.

15. Arrangement de façonnage (7) selon l'une des revendications 13 et 14, **caractérisé en ce qu'**au moins un dispositif de chauffage (4) peut être déplacé, de préférence par pivotement, entre une position de chauffage et une position de stationnement.

16. Arrangement de façonnage (7) selon l'une des revendications 13 à 15, **caractérisé en ce qu'**au moins deux dispositifs de chauffage (4) dirigés l'un vers l'autre sont présents, l'écart entre les deux dispositifs de chauffage (4) étant au moins quelque peu plus grand que l'écart entre les deux surfaces extérieures opposées de la palette (2) dans lesquelles doit respectivement être ménagé au moins un espace libre.

17. Arrangement de façonnage (7) selon l'une des revendications 13 à 16, **caractérisé en ce que** l'écart entre les dispositifs de chauffage (4) est modifiable.

18. Arrangement de façonnage (7) selon l'une des revendications 13 à 17, **caractérisé en ce que** chaque dispositif de chauffage (4) est disposé sur un bras de maintien (6) et **en ce que** les bras de maintien (6) sont reliés entre eux par le biais d'un élément de liaison (25).

19. Arrangement de façonnage (7) selon l'une des revendications 13 à 18, **caractérisé en ce qu'**au moins un doigt de façonnage (12.1) est monté pivotant autour d'un axe de pivotement (14) orienté parallèlement à la course de déplacement horizontale, de sorte que ce doigt de façonnage (12.1) peut être pivoté vers le haut et vers l'extérieur au moyen d'un mécanisme d'entraînement en vue d'effectuer le façonnage.

20. Arrangement de façonnage (7) selon l'une des revendications 13 à 19, **caractérisé en ce que** l'arrangement de façonnage (7) possède au moins deux doigts de façonnage (12) qui peuvent être déplacés dans la direction horizontale en vue de retirer la zone d'enveloppement (18) de la palette (2).

21. Arrangement de façonnage (7) selon la revendication précédente, **caractérisé en ce qu'**au moins un doigt de façonnage (12.1) est configuré et/ou disposé par rapport au(x) doigt(s) de façonnage (12) qui est (sont) associé(s) à ce doigt de façonnage (12.1) de telle sorte que ce doigt de façonnage (12.1) n'est pas en contact avec la zone d'enveloppement (18) lors du retrait.

22. Arrangement de façonnage (7) selon l'une des revendications 13 à 21, **caractérisé en ce que** l'arrangement de façonnage (7) possède un guide (8) et un mécanisme d'entraînement pour un déplacement horizontal et/ou l'arrangement de façonnage (7) possède un guide vertical et un mécanisme d'entraînement pour un déplacement vertical.

23. Arrangement de façonnage (7) selon l'une des revendications 13 à 22, **caractérisé en ce que** l'extrémité d'au moins un doigt de façonnage (12, 12.1) est réalisée sous la forme d'une patte et/ou d'un crochet (24, 24.1).

24. Arrangement de façonnage (7) selon l'une des revendications 13 à 23, **caractérisé en ce qu'**au niveau d'au moins un doigt de façonnage (12, 12.1), au moins une, de préférence chaque zone qui vient en contact avec l'enveloppement (17) et/ou avec la zone d'enveloppement (18) est revêtue et/ou équipée d'un matériau (27) anti-adhérence et/ou résistant à la chaleur.

25. Arrangement de façonnage (7) selon l'une des revendications 13 à 24, **caractérisé en ce que** l'arrangement de façonnage (7) se compose de deux moitiés, chaque moitié possédant respectivement au moins un doigt de façonnage (12.1) et le cas échéant aussi au moins un doigt de façonnage (12) et chaque moitié étant de préférence réalisée en symétrie et les deux moitiés pouvant de préférence être déplacées de manière synchrone.

26. Arrangement de façonnage (7) selon l'une des revendications 13 à 25, **caractérisé en ce qu'**une butée (15) qui limite un mouvement de pivotement d'au moins un doigt de façonnage (12.1) est associée à ce doigt de façonnage (12.1), laquelle s'étend en saillie parallèlement à la course de déplacement horizontale dans la direction orientée en sens inverse au-dessus du (des) doigt(s) de façonnage (12) associé(s) à ce doigt de façonnage (12.1).

27. Arrangement de façonnage (7) selon l'une des revendications 13 à 26, **caractérisé en ce qu'**un élément de compensation d'angle (11) de préférence réalisé sous la forme d'un tenon orienté verticalement, est présent pour adapter l'orientation de l'arrangement de façonnage (7) par rapport à la palette (2).

28. Arrangement de façonnage (7) selon l'une des revendications 13 à 27, **caractérisé en ce qu'**un élément de calage pouvant être déplacé en direction de la palette (2) se trouve de préférence dans la zone du côté à façonner de l'enveloppement (17) en vue de caler l'enveloppement (17) lors du retrait et/ou lors du déplacement vers le haut de la zone d'enveloppement (18) par rapport à la palette (2).
